(19) Europäisches Patentamt

European Patent Office

Office européen des brevets

(11) **EP 4 049 000 B1**

(12) **FASCICULE DE BREVET EUROPEEN**

(45) Date de publication et mention de la délivrance du brevet:
**17.12.2025 Bulletin 2025/51**

(21) Numéro de dépôt: **20790356.8**

(22) Date de dépôt: **21.10.2020**

(51) Classification Internationale des Brevets (IPC):
**G01N 15/0205** *(2024.01)* **G01N 15/06** *(2024.01)*
**G01N 15/00** *(2024.01)*

(52) Classification Coopérative des Brevets (CPC):
**G01N 15/0211; G01N 15/06;** G01N 15/075;
G01N 2015/0042; G01N 2015/0046;
G01N 2015/0222

(86) Numéro de dépôt international:
**PCT/EP2020/079644**

(87) Numéro de publication internationale:
**WO 2021/078805 (29.04.2021 Gazette 2021/17)**

(54) **DÉTECTEUR OPTIQUE DE PARTICULES**

OPTISCHER DETEKTOR VON PARTIKELN

OPTICAL DETECTOR OF PARTICLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.10.2019 FR 1911949**

(43) Date de publication de la demande:
**31.08.2022 Bulletin 2022/35**

(73) Titulaire: **Commissariat à l'Energie Atomique et
aux Energies
Alternatives
75015 Paris (FR)**

(72) Inventeurs:
- **JOBERT, Gabriel
  38054 GRENOBLE (FR)**
- **BARRITAULT, Pierre
  38054 GRENOBLE (FR)**
- **FOURNIER, Maryse
  38054 GRENOBLE (FR)**

(74) Mandataire: **Hautier IP
20, rue de la Liberté
06000 Nice (FR)**

(56) Documents cités:
EP-A2- 3 477 277     US-A- 5 101 113
US-A1- 2014 152 986

## Description

## DOMAINE TECHNIQUE DE L'INVENTION

La présente invention concerne le domaine de la détection optique de particules en général et plus particulièrement de particules de taille micrométrique, voire nanométrique. Elle trouve par exemple pour application le comptage optique de particules et l'analyse angulaire de la diffusion d'une ou plusieurs particules.

Des domaines d'application particulièrement avantageux, mais non limitatifs sont par exemple : le contrôle de la qualité de l'air, la détection d'espèces microbiologiques, la détection de poudre d'explosifs, la détection des incendies, les systèmes d'alarme peu sensibles aux faux positifs.

## ÉTAT DE LA TECHNIQUE

Les particules sont des objets microscopiques solides, liquides ou solides mouillés en suspension dans l'air. Leurs tailles varient de quelques dizaines de nanomètres à quelques dizaines de micromètres. Ces particules proviennent de sources variées telles que des incendies de forêts, des sites de construction, des sites industriels, des véhicules motorisés etc.

Lorsque la concentration de ces particules dépasse un certain seuil, elles ont un impact néfaste sur l'environnement et/ou la santé. Ainsi, des états ont fixé des seuils de concentration maximale. Par exemple, l'Union Européenne permet des concentrations maximales de 50 $\mu$g/m3 pour les particules de taille comprise entre 10 $\mu$m et 2.5 $\mu$m et de 25 $\mu$g/m3 pour les particules de taille inférieure à 2.5 $\mu$m.

Il est donc nécessaire de détecter avec précision la présence et la concentration de ces particules par gamme de taille.

Différentes méthodes de détection de particules existent, telles que les méthodes de détection par gravimétrie, par ionisation, par atténuation bêta, les méthodes de détection par mesure de mobilité aérodynamique ou de mobilité électrique, les méthodes de détection optiques.

Ces dernières sont avantageusement plus simples à mettre en œuvre, et plus répandues.

Les détecteurs optiques de particules sont généralement basés sur la détection d'une interaction entre une lumière et des particules. En pratique, les particules à détecter passent dans une zone éclairée par une source de lumière. L'intersection entre la zone éclairée et la zone potentielle de présence des particules est dite volume utile de détection du détecteur. Ce volume utile de détection est compris dans le champ de vue du détecteur. Le volume utile de détection peut correspondre au volume d'éclairement.

Si des particules sont présentes dans le volume utile de détection, celles-ci vont absorber une partie de la lumière qui provient de la source et vont dévier une autre partie de cette lumière hors de la direction principale de propagation, selon le phénomène de diffusion.

Une première méthode de détection optique, dite mesure d'obscuration, consiste donc à mesurer l'absorption de la lumière à travers un nuage de particules ou une accumulation de particules. Cette mesure permet de déterminer la concentration des particules à l'aide de la loi de Beer-Lambert si on connait a priori la composition du nuage de particules.

Une deuxième méthode consiste à analyser la lumière diffusée hors de l'axe optique. L'analyse angulaire de la lumière diffusée se fait à partir de l'enregistrement d'un diagramme de diffusion. Elle permet de déterminer la forme, la taille, l'indice optique et la concentration des particules. Par exemple, la taille, l'indice de réfraction et la concentration de particules peuvent être déterminées à partir des théories de diffusion de la lumière, par exemple la théorie de Mie (Réf : Bohren et Huffmann, Absorption and scattering of light by small particles, Ed. Wiley and Sons, 1983).

Les compteurs optiques de particules fonctionnent sur les principes cités ci-dessus. Ils ont pour particularité que le volume utile de détection est limité géométriquement, par exemple par focalisation d'une source laser et/ou par un canal micro-fluidique et/ou par un système de lentilles aérodynamiques. Cette limitation géométrique du volume utile de détection permet de détecter des particules uniques plutôt que des nuages.

Une solution permettant de réaliser de tels compteurs ou détecteurs optiques de particules en améliorant leur robustesse et en réduisant leur coût consiste à intégrer ces compteurs/détecteurs dans des puces miniaturisées à l'aide des technologies de la microélectronique et de la photonique.

Le document FR3062209 décrit un tel détecteur intégré. Ce détecteur comprend notamment un assemblage discret de photodétecteurs formant une rétine ainsi que des surfaces réfléchissantes pour projeter sur la rétine l'image de la lumière diffusée par la ou les particules. Un diagramme de diffusion caractéristique de la particule est ainsi obtenu.

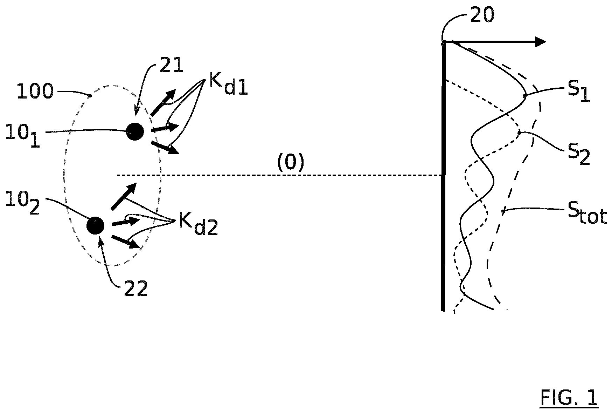

Un inconvénient de ce détecteur est qu'il ne permet pas de séparer les diagrammes de diffusion de plusieurs particules se trouvant simultanément dans le volume utile de détection. En effet, comme illustré à la figure 1, lorsque plusieurs particules $10_1$, $10_2$ sont éclairées simultanément dans le volume utile de détection 100, leurs diagrammes de diffusion respectifs $S_1$, $S_2$ formés sur la rétine 20 se superposent pour former un diagramme de diffusion total $S_{tot}$ peu résolu. Cette superposition est donc à l'origine d'une perte d'information sur les diagrammes individuels $S_1$, $S_2$. Il devient alors difficile de discerner les propriétés optiques et géométriques individuelles des particules, d'estimer les positions individuelles des particules et, *in fine,* de compter les particules.

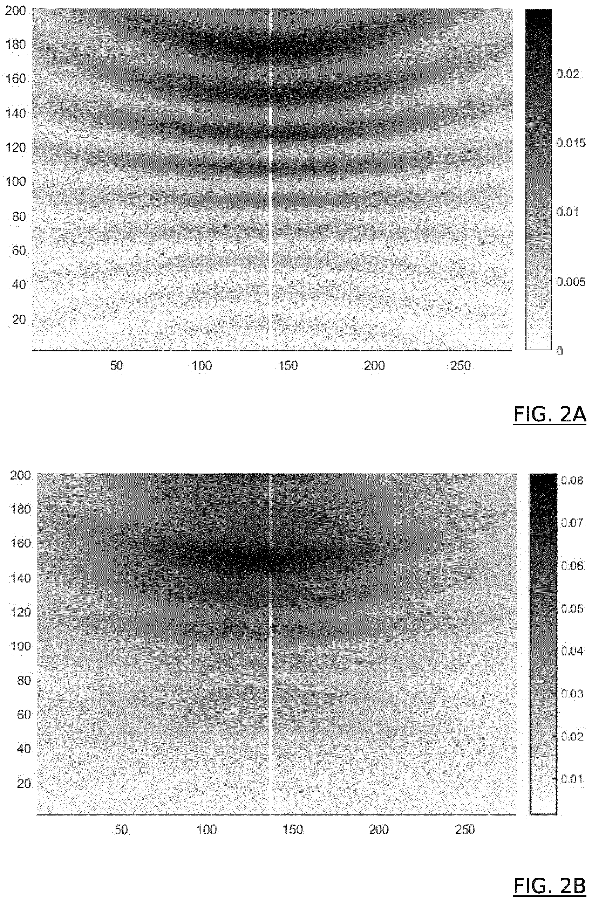

La figure 2A présente une simulation d'une image formée sur la rétine d'un tel détecteur, en éclairant une particule sphérique de 5 μm de diamètre. Cette image permet de déterminer facilement le diagramme de diffusion de cette particule.

La figure 2B présente une simulation d'une image formée sur la rétine d'un tel détecteur, en éclairant simultanément trois particules sphériques de 1 μm, 2 μm et 5 μm de diamètre respectivement. Cette image ne permet pas de différencier les diagrammes de diffusion de chacune des particules.

L'analyse angulaire réalisée par un tel détecteur n'est donc pas adaptée à la détection simultanée de plusieurs particules.

En outre, l'intensité lumineuse associée à la diffusion des particules présentant les plus grands diamètres est bien supérieure à l'intensité lumineuse associée à la diffusion des particules présentant les plus petits diamètres. Dans ce cas, le diagramme de diffusion d'une particule de grand diamètre peut aveugler celui d'une particule de petit diamètre. La comparaison des figures 2A, 2B illustre cette problématique d'aveuglement du détecteur par le diagramme de diffusion de la particule de plus grand diamètre.

Un autre inconvénient du détecteur décrit par le document FR3062209 est donc la difficulté de détecter des particules de petits diamètres en présence de particules de grand diamètre. Une détection fiable de ces particules de petits diamètres est un enjeu important puisque ces particules de petits diamètres sont généralement les plus dangereuses pour la santé.

Une solution connue permettant d'éviter l'analyse de diffusions multiples simultanées est de réduire le volume utile de détection, par exemple en réduisant la section du faisceau de lumière émis par la source. En limitant géométriquement la zone d'interaction particules/lumière, la probabilité d'occurrence de diffusions multiples simultanées est réduite. Cependant, en réduisant le volume utile de détection, la probabilité qu'une particule soit éclairée par le faisceau est également réduite. La sensibilité de détection du détecteur est alors diminuée.

Pour pallier cette diminution de sensibilité de détection, il est possible de guider le flux de particules vers le volume utile réduit, par exemple en utilisant un canal fluidique de faible section ou par le moyen d'une lentille aérodynamique.

Dans ce cas le temps de réponse fluidique du détecteur est cependant considérablement allongé. Ce temps de réponse fluidique correspond au temps nécessaire pour qu'une particule traverse le canal fluidique et soit détectée. Un temps de réponse trop long est particulièrement préjudiciable pour des applications de systèmes d'alarmes.

Une possibilité pour réduire ce temps de réponse est d'utiliser un système supplémentaire pour forcer la convection du flux, par exemple une pompe fluidique ou un ventilateur. La complexité et le coût d'un tel détecteur miniature est alors augmentée de façon considérable.

Une autre solution permettant d'éviter l'analyse de diffusions multiples simultanées est de procéder à une étape de dilution préalable du flux de particules, avant leur passage dans le volume utile de détection. Le flux de particules à analyser peut ainsi être mélangé avec un flux d'air préalablement filtré. Cette solution complexifie également le détecteur et réduit sa sensibilité.

Les documents US5101113A et US2014/152986A1 divulguent d'autres systèmes d'analyse de particules. Ces systèmes visent à réduire une détection multiple de particules, par le biais de filtres angulaires associés à des jeux de lentilles concentrant les signaux diffusés sur les détecteurs. La complexité de ces systèmes est élevée. Leur fiabilité est par conséquent plus faible. Ces systèmes ne sont pas non plus compacts.

Il existe donc un besoin consistant à réduire voire à supprimer certains au moins des inconvénients que présentent les détecteurs de l'état de la technique. Un objectif de la présente invention consiste à répondre à ce besoin.

Un autre objectif de la présente invention consiste à proposer une solution permettant de discerner des diagrammes de diffusions qui proviennent de diffusions multiples et simultanées.

Un autre objectif de la présente invention consiste à proposer une solution permettant d'analyser individuellement chacun desdits diagrammes de diffusion, de manière à déterminer des propriétés optiques (e.g. indice de réfraction) et/ou géométriques (e.g. diamètre) individuelles des particules.

## RÉSUMÉ DE L'INVENTION

Pour atteindre ces objectifs, la présente invention propose un détecteur optique de particules destiné à détecter simultanément au moins une première particule et au moins une deuxième particule au sein d'un volume utile de détection destiné à accueillir un fluide transportant des particules et à être traversé par des rayons lumineux incidents émis par au moins une source primaire, lesdites première et deuxième particules formant respectivement des première et deuxième sources secondaires émettant respectivement, lorsqu'elles sont situées dans le volume utile de détection et qu'elles diffusent une partie des rayons lumineux incidents, des premiers rayons lumineux diffusés et des deuxièmes rayons lumineux diffusés. Ce détecteur comprend une rétine formée par une pluralité de photodétecteurs aptes à recevoir des rayons lumineux diffusés.

Avantageusement, ce détecteur comprend en outre au moins un réticule interposé entre le volume utile de détection et la rétine, et ce réticule comprend :

- au moins une zone de passage optique autorisant un passage vers la rétine d'une partie des premiers rayons lumineux diffusés (dite première partie diffusée) et d'une partie des deuxièmes rayons lumineux diffusés (dite deuxième partie diffusée), et

- au moins une zone de blocage optique interdisant un passage vers la rétine d'une partie des premiers rayons lumineux diffusés (dite première partie bloquée) et d'une partie des deuxièmes rayons lumineux diffusés (dite deuxième partie bloquée).

Au moins une parmi lesdites zones de passage et de blocage optique :

- est séparée de la rétine par une distance minimale Z prise selon un axe optique (O) normal à la rétine, i.e. un axe normal à un plan dans lequel s'étend principalement une face de la rétine tournée au regard du réticule si la rétine est plane,

- présente en outre au moins une dimension a prise selon une direction transversale à l'axe optique.

Le réticule et la rétine sont configurés, en particulier la distance minimale Z et la dimension a, de sorte que la première partie diffusée est reçue par un premier ensemble de photodétecteurs dont la répartition délimite sur la rétine une première figure prise parmi une tache et une ombre, la deuxième partie diffusée est reçue par un deuxième ensemble de photodétecteurs dont la répartition délimite sur la rétine une deuxième figure prise parmi une tache et une ombre, ladite deuxième figure étant au moins en partie distincte de la première figure lorsque les première et deuxième parties passant à travers l'au moins une zone de passage optique définissent ensemble un angle $\theta_{ij}$ dont la valeur est au moins égale à une résolution angulaire $\delta\theta$ du détecteur.

Ce détecteur optique ne comprend pas de lentille entre le réticule et la rétine. L'absence de lentille permet d'améliorer la compacité du détecteur. Cela permet également d'améliorer la robustesse et/ou la fiabilité du détecteur.

S'il y a une pluralité de particules dans le volume utile, la définition ci-dessus s'applique pour chaque couple de particules appartenant à cette pluralité de particules.

Pour chaque particule diffusante, le diagramme de diffusion reçu par les photodétecteurs est par exemple issu du produit de convolution du diagramme de diffusion de la particule par la figure (tache ou ombre) projetée sur la rétine au travers du réticule.

Le réticule peut être sombre. Dans ce cas, il bloque une majorité des rayons diffusés par la particule diffusante considérée et projette sur la rétine une partie diffusée sous forme de tache, au travers de l'au moins une zone de passage optique également dénommée ouverture optique. La surface occupée par l'au moins en zone de blocage optique est supérieure à la surface occupée par l'au moins en zone de passage optique. Ainsi dans ce cas la figure formée sur la rétine est une tache.

Avec un réticule sombre, les taches sont facilement discernables. En effet ce type de réticule limite la superposition des signatures de chaque particule qui diffuse. Par ailleurs ce type de réticule offre un très bon contraste. En outre l'analyse des signatures est possible sur quasiment toute la tache même s'il y a plus de trois particules.

Le réticule peut être clair. Dans ce cas, il laisse passer une majorité des rayons diffusés par la particule diffusante considérée et projette sur la rétine une ombre formée par l'au moins une zone de blocage optique également dénommée surface opaque. La surface occupée par l'au moins en zone de passage optique est supérieure à la surface occupée par l'au moins en zone blocage de optique. Ainsi dans ce cas la figure formée sur la rétine est une ombre.

Avec un réticule clair, la surface d'analyse est très grande. L'ombre projetée donne une information précise et facilement identifiable de l'information de position.

Afin de combiner les avantages des réticules sombres et clairs, on peut également prévoir que le réticule présente des portions dans lesquelles les zones de passage optique occupent une surface supérieure à celle des zones de blocage optique et d'autres portions dans lesquelles les zones de blocage optique occupent une surface supérieure à celle des zones de passage optique

Le réticule de ce détecteur est donc configuré pour filtrer les premiers et deuxièmes rayons lumineux diffusés respectivement par les première et deuxième particules, avant réception des rayons diffusés par la rétine. Cela permet notamment d'éviter au moins en partie une superposition sur la rétine de ces premiers et deuxièmes rayons lumineux diffusés. Cela permet également d'éviter un aveuglement de la rétine, puisque la totalité des premiers et deuxièmes rayons lumineux diffusés ne parvient pas à la rétine. Dans le cas d'un réticule sombre comprenant une ou plusieurs ouvertures optiques, cela permet également d'éviter que d'autres rayons, provenant par exemple de diffusions parasites, ne parviennent à la rétine. Ce détecteur présente ainsi une sensibilité réduite aux diffusions parasites.

En effet, dans le cadre du développement de la présente invention, il s'est avéré que les détecteurs miniaturisés connus de l'art antérieur présentent des inconvénients relatifs aux diffusions parasites du faisceau de source sur les différents éléments du détecteur. Dans ces détecteurs connus, comme le faisceau de source est plusieurs ordres de grandeurs plus lumineux que la lumière diffusée par les particules, les diffusions parasites peuvent suffire à bruiter voire aveugler la rétine, ce qui rend l'analyse angulaire difficile voire impossible. Les diffusions parasites sont moins problématiques pour des détecteurs de grande taille (i.e. de taille centimétrique), car les différents éléments diffusants sont plus éloignés de la rétine et sont généralement hors du champ de vue du détecteur.

Avec le détecteur selon la présente invention, après filtration par le réticule sombre, la rétine reçoit ainsi uniquement les première et deuxième parties diffusées.

En coupant une partie des premiers et deuxièmes rayons lumineux diffusés, la probabilité que les première et deuxième parties diffusées soient superposées sur la rétine diminue. En particulier, lors du passage des première et deuxième particules dans le volume utile de détection, il existe nécessairement des positions de ces particules au sein du volume utile de détection pour lesquelles les première et deuxième parties diffusées ne sont pas superposées sur la rétine. Il est ainsi possible de séparer les premier et deuxième diagrammes de diffusion formés respectivement par les première et deuxième parties diffusées reçues simultanément par la rétine.

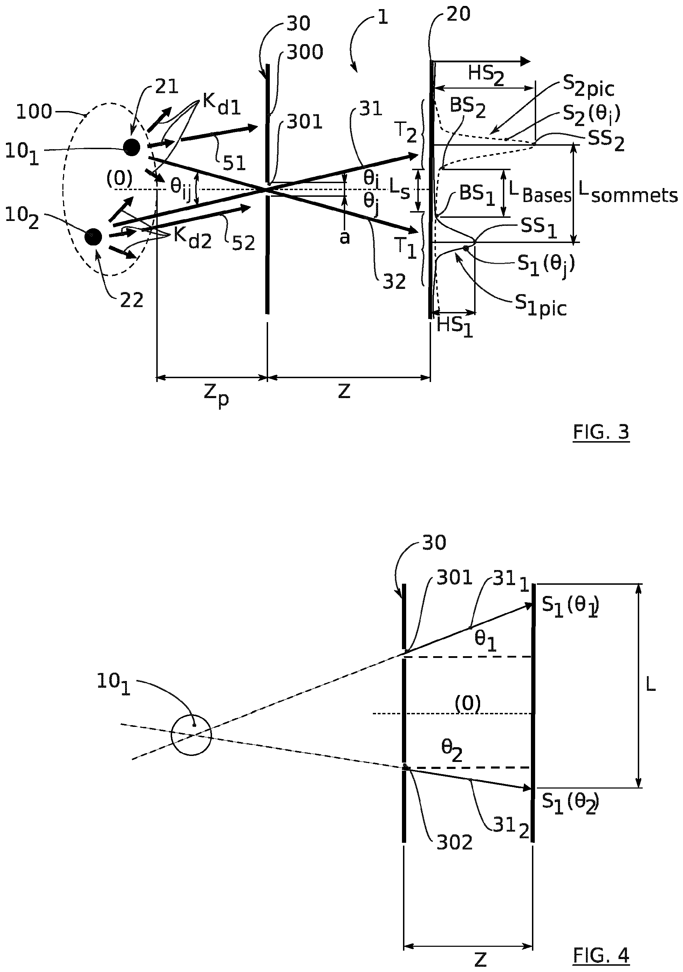

Tel qu'illustré à la figure 3 et contrairement au dispositif illustré à la figure 1, seules les première 31 et deuxième 32 parties diffusées contribuent respectivement à la formation d'un premier et d'un deuxième diagramme de diffusion $S_1$, $S_2$ sur la rétine 20. Le premier diagramme de diffusion $S_1$ correspond donc à un échantillonnage du diagramme de diffusion complet de la première particule $10_1$. De la même manière, le deuxième diagramme de diffusion $S_2$ correspond à un échantillonnage du diagramme de diffusion complet de la deuxième particule $10_2$. Le réticule 30 sombre permet avantageusement d'effectuer un tel échantillonnage, en filtrant les premiers et deuxièmes rayons lumineux diffusés $kd_1$, $kd_2$. En particulier, le diagramme de diffusion complet de la première particule $10_1$ est principalement échantillonné selon un angle $\theta_j$ entre les rayons diffusés $kd_1$ de la première partie diffusée 31 et l'axe optique O. Le diagramme de diffusion complet de la deuxième particule $10_2$ est principalement échantillonné selon un angle $\theta_i$ entre les rayons diffusés $kd_2$ de la deuxième partie diffusée 32 et l'axe optique O. L'axe optique O est perpendiculaire à la rétine 20 est plus précisément perpendiculaire à la face de la rétine 20 tournée au regard du réticule 30 sombre.

Dès lors, le réticule 30 sombre permet de séparer spatialement sur la rétine 20 les diagrammes de diffusion $S_1$, $S_2$. Comme illustré à la figure 3, la position du pic $S_{1pic}$ lumineux formant le premier diagramme de diffusion $S_1(\theta_j)$ est directement reliée à l'angle $\theta_j$ sous lequel est vue la première particule $10_1$ à travers l'au moins une ouverture 301 du réticule sombre 30. De la même manière, la position du pic $S_{1pic}$ lumineux formant le deuxième diagramme de diffusion $S_2(\theta_i)$ est directement reliée à l'angle $\theta_i$ sous lequel est vue la deuxième particule $10_2$ à travers l'au moins une ouverture 301 du réticule sombre 30. Par conséquent, deux particules $10_1$, $10_2$ situées à des positions différentes au sein du volume utile de détection 100 projettent des pics $S_{1pic}$, $S_{2pic}$ lumineux à des positions différentes sur la rétine 20. Les pics $S_{1pic}$, $S_{2pic}$ lumineux sont ainsi séparés sur la rétine 20, au niveau de leurs sommets par une distance de séparation $L_{Sommets}$ et au niveau de leurs bases par une distance de séparation $L_{Bases}$.

Plus précisément, $L_{Bases}$ correspond à la plus petite distance entre la base $BS_1$ formée par le pic $S_{1pic}$ et la base $BS_2$ formée par le pic $S_{2pic}$. Il ne s'agit pas de la distance entre les sommets $SS_1$ et $SS_2$ de ces pics $S_{1pic}$; $S_{2pic}$. $BS_1$, $BS_2$, $SS_1$ et $SS_2$ sont référencées en figure 3. Un pic peut présenter une forme générale de cône (par exemple lorsque l'ouverture est un sténopé). Alternativement, un pic peut également présenter une forme qui s'étend selon une courbe rectiligne (cas d'une ouverture ou zone de passage optique formant une fente rectiligne) ou selon une courbe curviligne (cas d'une ouverture ou zone de passage optique formant une fente courbe ou un contour fermé). La distance $L_{Bases}$ correspond alors à la plus petite distance entre deux pics adjacents appartenant aux diagrammes projetés par deux particules et correspondant à des zones identiques de l'ouverture. $L_{Bases}$ est mesurée sur la face de la rétine 20 sur laquelle parviennent les première 31 et deuxième 32 parties diffusées.

Avantageusement, l'au moins une zone de passage optique est en outre configurée pour que cette séparation entre les premier et deuxième diagrammes de diffusion $S_1$, $S_2$ soit suffisamment résolue sur la rétine 20, c'est-à-dire qu'elle corresponde à une distance de séparation Ls entre les taches T1, T2, ou une distance $L_{Bases}$ entre les bases des pics des diagrammes lumineux ou une distance $L_{Sommets}$ entre les sommets des pics des diagrammes lumineux, supérieure ou égale à K fois un pas Lpix entre deux photodétecteurs adjacents de la rétine 20, avec K=2, de préférence K=5, de préférence K=10, de préférence K=20.

Le pas Lpix est mesuré dans un plan parallèle à une face de la rétine 20 tournée au regard du réticule sombre 30 si la rétine est plane. Le pas Lpix correspond à la plus petite distance entre les centres de deux photodétecteurs adjacents.

L'au moins une zone de passage est de préférence dimensionnée en fonction de la distance de séparation $L_S$ et de la résolution angulaire $\delta\theta$ du détecteur souhaitée, par exemple $\delta\theta$ de l'ordre de 2°. En particulier, la dimension a de l'au moins une zone de passage est telle que, $a = (Z.\tan(\delta\theta) - L_s)\frac{Z_p}{Z + Z_p}$

où Zp est la distance minimale séparant le volume utile de détection de l'au moins une zone de passage, selon l'axe optique O. Cette dimension a est donc également fonction des distances Z et Zp qui déterminent une profondeur d'encombrement du détecteur selon son axe optique O. La dimension a peut alternativement être dimensionnée en fonction de la distance de séparation $L_{Sommets}$ ou de la distance de séparation $L_{Bases}$. Il suffit dans ce cas de remplacer Ls par $L_{Sommets}$ ou $L_{Bases}$ dans la formule ci-dessus.

De façon préférée mais optionnelle, le détecteur présente un champ de vue défini par un angle *FOV* = atan(*L*/2z) où L est une dimension latérale de la rétine prise dans un plan parallèle à une face de la rétine tournée au regard du réticule sombre si la rétine est plane, Z étant la distance séparant le réticule sombre de la rétine, et le volume utile de détection est compris dans ce champ de vue. Le champ de vue présente un sommet s'étendant depuis l'au moins une ouverture et un axe de symétrie parallèle à l'axe optique. Le volume utile de détection de ce détecteur peut ainsi être significativement augmenté, et présenter par exemple un diamètre de 100 μm à 2 mm. En outre, tout le volume utile de détection peut être projeté sur la rétine au travers de l'au moins une ouverture. La sensibilité de détection du détecteur est améliorée.

Ce détecteur présente ainsi une sensibilité de détection et un volume utile de détection supérieurs aux détecteurs miniaturisés existants, tout en conservant une conception simple et peu coûteuse, et un temps de réponse fluidique court.

Ainsi, la présente invention propose une solution efficace pour améliorer les détecteurs actuels. Elle propose un détecteur optique de particules miniaturisé permettant de discerner des diagrammes de diffusions qui proviennent de diffusions multiples et simultanées. De préférence, ce détecteur permet en outre d'analyser individuellement chacun desdits diagrammes de diffusion, de manière à déterminer les propriétés optiques (e.g. indice de réfraction) et géométriques (e.g. diamètre) individuelles des particules. De préférence, ce détecteur présente également une bonne sensibilité de détection et/ou un temps de réponse fluidique écourté. De préférence, ce détecteur permet également d'analyser un grand volume utile de détection (e.g. présentant un diamètre de 100 μm à 2 mm).

La présente invention concerne aussi un système comprenant un tel détecteur, et l'au moins une source primaire.

Selon un mode de réalisation optionnel, l'au moins une source primaire comprend une première source primaire émettant des rayons lumineux incidents présentant au moins une première longueur d'onde et une deuxième source primaire émettant des rayons lumineux incidents présentant au moins une deuxième longueur d'onde différente de la première longueur d'onde, lesdites première et deuxième sources primaires présentant respectivement des première et deuxième directions principales d'émission configurées pour se croiser au sein du volume utile de détection. Ce système permet avantageusement de réaliser des images polychromatiques des diagrammes de diffusion.

La présente invention concerne encore un procédé de fabrication d'un tel détecteur de particules, comprenant au moins les étapes suivantes :

- fournir un bloc optiquement transparent présentant une première face et une deuxième face opposée à la première face,
- déposer sur la première face un revêtement opaque ou réfléchissant, par exemple une couche carbonée ou métallique,

- de façon optionnelle, percer le bloc transparent selon une direction sensiblement normale aux première et deuxième faces, par exemple par gravure laser ou gravure humide profonde ou encore gravure de type RIE (reactive ion etching signifiant gravure ionique réactive), de façon à réaliser un canal fluidique traversant,
- former au moins une ouverture dans le revêtement au niveau dudit au moins un motif, par exemple par gravure, de façon à réaliser un réticule sombre comprenant ledit revêtement opaque ou réfléchissant et ladite au moins une ouverture. Par exemple former au moins un motif de sténopé ou de fente sur le revêtement de la première face, par exemple par lithographie ou par dépôt.
- de façon optionnelle, déposer une couche opaque sur les surfaces du bloc sensiblement normales aux première et deuxième faces, par exemple par projection de peinture,
- Assembler, par exemple par collage, le bloc et une rétine comprenant une pluralité de photodétecteurs, au niveau de la deuxième face du bloc.

## BRÈVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

La FIGURE 1 illustre schématiquement en coupe un détecteur et les diagrammes de diffusion de deux particules formés sur la rétine de ce détecteur selon l'art antérieur.

La FIGURE 2A présente une simulation d'une image formée sur la rétine du détecteur de l'art antérieur illustré à la FIGURE 1, à partir de la diffusion d'une particule sphérique de 5 μm de diamètre.

La FIGURE 2B présente une simulation d'une image formée sur la rétine du détecteur de l'art antérieur illustré à la FIGURE 1, à partir de la diffusion simultanée de trois particules sphériques de 1 μm, 2 μm et 5 μm de diamètre respectivement.

La FIGURE 3 illustre schématiquement en coupe un détecteur selon un exemple de mode de réalisation de l'invention et les diagrammes de diffusion de deux particules formés sur la rétine de ce détecteur.

La FIGURE 4 illustre schématiquement en coupe un détecteur selon un autre mode de réalisation de la présente invention.

La FIGURE 5 illustre schématiquement en vue en perspective un détecteur selon un autre mode de réalisation de la présente invention.

Les FIGURES 6A à 6J illustrent schématiquement des motifs de zones de passage d'un réticule d'un détecteur selon différents modes de réalisation de la présente invention.

Les FIGURES 7A et 7B illustrent schématiquement une projection de rayons diffusés sur un réticule d'un détecteur selon un mode de réalisation de la présente invention.

Les FIGURES 8A et 8B illustrent schématiquement une projection sur une rétine de rayons diffusés au travers d'une zone de passage d'un détecteur selon un mode de réalisation de la présente invention.

La FIGURE 9 illustre schématiquement en vue en perspective un détecteur selon un autre mode de réalisation de la présente invention.

La FIGURE 10 illustre schématiquement en vue en perspective un détecteur selon un autre mode de réalisation de la présente invention.

La FIGURE 11 présente une simulation d'une image formée sur la rétine du détecteur illustré à la FIGURE 9, à partir de la diffusion simultanée de trois particules sphériques de 1 $\mu$m, 2 $\mu$m et 5 $\mu$m de diamètre respectivement.

La FIGURE 12 illustre un réticule clair selon un mode de réalisation de la présente invention.

La figure 13A illustre la projection sur la rétine d'un diagramme de diffusion issu d'une particule diffusante, au travers du réticule clair illustré à la figure 12.

La figure 13B illustre la projection sur la rétine de deux diagrammes de diffusion issus de deux particules diffusantes, au travers du réticule clair illustré à la figure 12.

La figure 13C illustre la projection sur la rétine de trois diagrammes de diffusion issus de trois particules diffusantes, au travers du réticule clair illustré à la figure 12.

La FIGURE 14 illustre un réticule selon un mode de réalisation de la présente invention.

La FIGURE 15A illustre schématiquement en vue de dessus un détecteur comprenant un réticule et un canal fluidique traversant le réticule, selon un mode de réalisation de la présente invention.

La FIGURE 15B illustre schématiquement en vue de dessus un détecteur comprenant un réticule et un canal fluidique traversant le réticule, selon un autre mode de réalisation de la présente invention.

La FIGURE 16 illustre schématiquement en vue en perspective un détecteur comprenant un réticule et un canal fluidique traversant le réticule, selon un autre mode de réalisation de la présente invention.

La FIGURE 17 illustre schématiquement en coupe un détecteur comprenant un réticule et un canal fluidique traversant le réticule, selon un autre mode de réalisation de la présente invention.

Les FIGURES 18A à 18G illustrent schématiquement des étapes d'un procédé de fabrication d'un détecteur selon un mode de réalisation de la présente invention.

Les FIGURES 19A et 19B illustrent schématiquement des étapes d'un procédé de fabrication d'un détecteur selon un autre mode de réalisation de la présente invention.

La FIGURE 20A illustre schématiquement en vue en perspective un système comprenant un détecteur selon un mode de réalisation de la présente invention et une source primaire selon un premier mode de réalisation.

La FIGURE 20B illustre schématiquement en vue en perspective un système comprenant un détecteur selon un mode de réalisation de la présente invention et une source primaire selon un deuxième mode de réalisation.

La FIGURE 21A illustre schématiquement en vue en perspective un système comprenant un détecteur et deux sources primaires selon un mode de réalisation de la présente invention.

La FIGURE 21B illustre schématiquement en vue en perspective un système comprenant un détecteur et deux sources primaires selon un autre mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différentes structures (particules, réticule, rétine) ne sont pas représentatives de la réalité.

## DESCRIPTION DÉTAILLÉE DE L'INVENTION

Avant d'entamer une revue détaillée de modes de réalisation de l'invention, il est rappelé que, de manière facultative, l'invention comprend au moins l'une quelconque des caractéristiques optionnelles suivantes qui peuvent être utilisées en association ou alternativement.

Selon un mode de réalisation optionnel, la deuxième figure est décalée sur la rétine par rapport à la première figure. Selon un mode de réalisation optionnel, la plus petite distance Ls correspondant à ce décalage entre ces deux figures est supérieure ou égale à 2*Lpix lorsque les première et deuxième parties passant à travers l'au moins une zone de passage optique définissent ensemble un angle $\theta_{ij}$ dont la valeur est au moins égale à une résolution angulaire $\delta\theta$ du détecteur, Lpix étant le pas entre deux photodétecteurs adjacents de la rétine.

Selon un exemple de réalisation, la distance Ls entre les figures projetées sur la rétine est non nulle. Les photodétecteurs de la rétine 30 captent des rayons lumineux diffusés par l'une seulement des particules $10_1$, $10_2$. Autrement dit, un même photodétecteur ne capte pas les rayons diffusés par plus d'une particule. Ainsi, on évitera un aveuglement des photodétecteurs ou une superposition des diagrammes sur l'un des photodétecteurs.

Selon un mode de réalisation optionnel, la dimension a est configurée de sorte que

$$a = (Z.\tan(\delta\theta) - L_s)\frac{Z_p}{Z + Z_p}$$

où $Z_p$ est la distance minimale séparant le volume utile de détection d'au moins une parmi lesdites zones de passage et de blocage optique.

Selon un mode de réalisation optionnel, le réticule et la rétine sont configurés, en particulier la distance minimale Z et la dimension a, de sorte à générer sur la rétine un premier diagramme de diffusion S1 formé par la première partie diffusée, et un deuxième diagramme de diffusion S2 formé par la deuxième partie diffusée.

Selon un exemple de réalisation, lesdits premier et deuxième diagrammes de diffusion S1, S2 sont distincts. Ils sont décalés.

Selon un exemple de réalisation, lesdits premier et deuxième diagrammes de diffusion S1, S2 sont distincts lorsque les première et deuxième parties passant à travers l'au moins une zone de passage optique définissent ensemble un angle θij dont la valeur est au moins égale à une résolution angulaire δθ du détecteur, Lpix étant le pas entre deux photodétecteurs adjacents de la rétine.

Selon un exemple de réalisation, lesdits premier et deuxième diagrammes de diffusion S1, S2 forment chacun au moins un pic $S_{1pic}$, $S_{2pic}$ lumineux. Ces pics $S_{1pic}$, $S_{2pic}$ lumineux sont distincts. Ils sont décalés.

Selon un mode de réalisation, lesdits premier et deuxième diagrammes de diffusion S1, S2 forment chacun au moins un pic $S_{1pic}$, $S_{2pic}$ lumineux correspondant à l'au moins une zone de passage optique et présentant chacun une base $BS_1$, $BS_2$. Les bases $BS_1$, $BS_2$ de chaque diagramme de diffusion S1, S2 sont décalées sur la rétine d'une distance de séparation $L_{Bases} \geq 2*Lpix$ lorsque les première et deuxième parties passant à travers l'au moins une zone de passage optique définissent ensemble un angle $\theta_{ij}$ dont la valeur est au moins égale à une résolution angulaire δθ du détecteur, Lpix étant le pas entre deux photodétecteurs adjacents de la rétine. De préférence, $L_{Bases} \geq 5*Lpix$. De préférence, $L_{Bases} \geq 10*Lpix$. De préférence, le pic $S_{1pic}$, $S_{2pic}$ de chaque diagramme comprend au moins un sommet $SS_1$, $SS_2$, le point le plus haut de la base $BS_1$, $BS_2$ étant situé à une hauteur du pic $S_{1pic}$, $S_{2pic}$ égale à 10% de la hauteur $HS_1$, $HS_2$ du sommet $SS_1$, $SS_2$, et de préférence située à une hauteur du pic $S_{1pic}$, $S_{2pic}$ égale à 5% de la hauteur du sommet $SS_1$, $SS_2$. La distance $L_{Bases}$ est mesurée au point le plus haut de la base $BS_1$, $BS_2$. Ainsi, il est possible que deux pics adjacents se chevauchent dans des zones situées sous les bases (recouvrement partiel des taches). Ces zones présentent des intensités lumineuses faibles. Pour autant au niveau des bases les diagrammes ne se chevauchent pas.

Selon un mode de réalisation, lesdits premier et deuxième diagrammes de diffusion S1, S2 forment chacun au moins un pic $S_{1pic}$, $S_{2pic}$ lumineux correspondant à l'au moins une zone de passage optique et présentant un sommet $SS_1$, $SS_2$. Les sommets $SS_1$, $SS_2$ de chaque diagramme de diffusion S1, S2 sont décalées sur la rétine d'une distance de séparation $L_{Sommets} \geq 10*Lpix$ lorsque les première et deuxième parties passant à travers l'au moins une zone de passage optique définissent ensemble un angle $\theta_{ij}$ dont la valeur est au moins égale à une résolution angulaire δθ du détecteur, Lpix étant le pas entre deux photodétecteurs adjacents de la rétine. De préférence, $L_{Sommets} \geq 20*Lpix$.

S'il y a une pluralité de particules dans le volume utile, les définitions ci-dessus s'appliquent pour chaque couple de particules appartenant à cette pluralité de particules. En effet s'il y a une pluralité de particules il y a une pluralité de taches et une pluralité de diagrammes de diffusion.

Selon un mode de réalisation, les premières et deuxièmes ombres B1, B2 formées sur la rétine par l'au moins une zone de blocage optique sont distinctes. Elles sont décalées.

Selon un mode de réalisation, les premières et deuxièmes ombres B1, B2 sont en partie superposées sur la rétine.

Selon un exemple, la zone de passage optique forme au moins une ouverture délimitée par la zone de blocage optique, la première figure et la deuxième figure étant chacune une tache (ou tache éclairée). La zone de passage optique est ainsi entourée, de préférence entièrement par la zone de blocage optique. Le contour de la zone de passage optique est défini ou est constitué, de préférence entièrement, par la zone de blocage optique.

Selon un exemple, la zone de passage optique forme au moins une ouverture entourant, de préférence entièrement, la zone de blocage optique, la première figure et la deuxième figure étant chacune une ombre. La zone de blocage optique est ainsi entourée, de préférence entièrement par la zone de passage optique. Le contour de la zone de blocage optique est défini ou est constitué, de préférence entièrement, par la zone de passage optique.

Selon un exemple, l'au moins une zone de passage optique comprend au moins un motif parmi un sténopé et une fente. Le motif de sténopé permet de projeter sur la rétine une tache pour chacune des particules diffusantes. Cette tache forme le diagramme de diffusion $S(\theta_j)$ de la particule diffusante considérée et correspond aux seuls rayons lumineux diffusés par cette particule passant à travers le sténopé et formant sensiblement un angle de diffusion $\theta_j$ avec l'axe optique. Cela permet de limiter les diagrammes de diffusion de différentes particules à des taches facilement discernables sur la rétine. Le motif de fente permet de projeter sur la rétine une ligne pour chacune des particules diffusantes. Cette ligne forme le diagramme de diffusion $S(\theta_i...\theta_j)$ de la particule diffusante considérée et correspond aux seuls rayons lumineux diffusés par cette particule passant à travers la fente et formant sensiblement un angle de diffusion compris dans l'intervalle d'angles [θ_i...θ_j] relativement à l'axe optique. Cela permet d'obtenir un diagramme de diffusion portant plus d'information sur la particule diffusante.

Selon un exemple, l'au moins une zone de passage optique comprend au moins un motif de sténopé et au moins un motif de fente, lesdits motifs étant en partie superposés. Cela permet de faciliter la lecture du motif projeté sur la rétine, par exemple en utilisant un algorithme de reconnaissance de forme. La combinaison de la forme circulaire du sténopé et de la forme rectiligne ou curviligne de la fente est ainsi facilement discernable sur la rétine.

Selon un exemple, l'au moins un motif de sténopé présente un diamètre environ deux fois supérieur à une largeur de l'au moins un motif de fente, ladite largeur étant prise selon une direction normale à la tangente à la fente au point considéré.

Selon un exemple, l'au moins un motif de fente est rectiligne ou courbe.

Selon un exemple, l'au moins une zone de passage optique comprend une pluralité de motifs de sténopé. Ces motifs de sténopé peuvent être reliés entre eux, par exemple par une ou plusieurs fentes, de façon à former une zone de passage optique. Ces motifs de sténopé peuvent être séparés les uns des autres, de façon à former plusieurs ouvertures ou zones de passage optique. Une pluralité de motifs de sténopé permet de projeter sur la rétine une pluralité de taches correspondantes, pour chacune des particules diffusantes. Selon le principe du retour inverse de la lumière, il est ainsi possible d'estimer la position d'une particule diffusante donnée, à partir des positions des taches sur la rétine et des angles que celles-ci forment vis-à-vis des axes passant par les sténopés correspondants et parallèles à l'axe optique. Par exemple, deux taches obtenues à travers un double sténopé permettent de tracer deux rayons « retour » qui se croisent à la position estimée de la particule diffusante. Dans le cas d'une zone de passage optique comprenant N sténopés (par exemple N compris en 2 et 10), il est possible de croiser 2 parmi N rayons $\binom{N}{2}$ et donc d'estimer une position de la particule diffusante moyennée à partir de $\binom{N}{2}$ valeurs.

L'utilisation de N sténopés permet ainsi de réaliser une estimation précise de la position de la particule. Cela permet d'obtenir un diagramme de diffusion échantillonné sur N angles de diffusion. Cela permet par exemple de réaliser une analyse comparative théorie/mesure améliorée du diagramme de diffusion. L'analyse de la nature de la particule est ainsi améliorée.

Selon un exemple, la zone de passage optique comprend au moins un motif de fente courbe présentant une courbure négative dirigée vers un centre du réticule. Un tel motif permet de compenser une courbure positive induite par un milieu d'épaisseur Z compris entre le réticule et la rétine présentant un indice de réfraction supérieur à celui où se situe la particule. Ce milieu déforme en effet le diagramme de diffusion projeté sur la rétine à travers la fente.

Une courbure opposée à cette déformation permet ainsi de « redresser » le diagramme de diffusion, et permet par exemple d'obtenir un diagramme de diffusion sous forme de ligne sur la rétine. Cela facilite la lecture du diagramme de diffusion.

Selon un exemple, la zone de passage optique comprend au moins un motif de fente courbe présentant une courbure positive dirigée vers une périphérie du réticule.

Selon un exemple, le motif de fente forme un contour fermé.

Selon un exemple, le contour fermé est un anneau. Cela favorise l'observation des alternances de Mie, qui se présentent sous forme de lobes dans le diagramme de diffusion, selon la théorie de Mie.

Selon un exemple, le contour fermé est une ellipse. Cela permet d'optimiser l'observation des alternances de Mie, dans le cas où les rayons incidents éclairant une particule donnée sont sensiblement parallèles au plan dans lequel s'étend le réticule.

Selon un exemple, l'au moins une zone de passage optique comprend une pluralité de zones de passage optique présentant chacune au moins un motif pris parmi un sténopé et une fente. Cela permet de faciliter la lecture du motif projeté sur la rétine et d'améliorer la reconnaissance du diagramme de diffusion. Cela permet également d'obtenir un diagramme de diffusion plus riche, c'est-à-dire portant plus d'information sur la particule diffusante. Certaines au moins de ces ouvertures ou zones de passage optique peuvent être distinctes c'est-à-dire séparées les unes des autres ou au contraire se chevaucher, se croiser ou se toucher.

Selon un exemple, l'au moins une zone de passage optique présente une taille caractéristique a telle que a ≥ 10.Lpix.(Z/(Z+Zp), où Zp est la distance minimale séparant le volume utile de détection d'au moins une parmi lesdites zones de passage et de blocage optique et Lpix est le pas entre deux photodétecteurs adjacents.

Selon un exemple, l'au moins une zone de passage optique présente une surface de passage $S_a$ inférieure à 50% de la surface totale du réticule, de préférence inférieure à 10% de la surface totale du réticule. Cela permet d'obtenir une bonne lisibilité du diagramme de diffusion. Cela permet d'augmenter la probabilité d'éviter une superposition des diagrammes de diffusion de plusieurs particules présentes simultanément dans le volume utile de détection.

Selon un exemple, la résolution angulaire δθ du détecteur est de l'ordre de 2°.

Selon un exemple, la distance minimale $Z_p$ séparant le volume utile de détection d'au moins une parmi lesdites zones de passage et de blocage optique est telle que $0,2.2 \leq Z_p \leq 2.Z.$

Selon un exemple, tous les photodétecteurs ont les mêmes dimensions. En particulier ils ont tous la même largeur.

Selon un exemple, le détecteur comprend en outre au moins un canal fluidique destiné à guider les particules vers le volume utile de détection, le canal traversant le réticule au niveau d'un orifice formé dans le réticule. Cela permet d'améliorer la sensibilité de détection du détecteur en préservant une bonne compacité du détecteur et un faible encombrement.

Selon un exemple, l'au moins une zone de passage optique comprend une pluralité de zones de passage optique réparties autour de l'orifice. Une telle répartition permet de différencier des zones d'analyse, par exemple une zone de diffusion frontale filtrant et recevant des rayons diffusés se propageant dans le sens des rayons incidents et une zone de rétrodiffusion filtrant et recevant des rayons rétrodiffusés se propageant dans un sens opposé à celui des rayons incidents.

Selon un exemple, la pluralité de zones de passage optique comprend au moins une première zone de passage optique et au moins une deuxième zone de passage optique situées de part et d'autre de l'orifice du canal, ladite au moins une première zone de passage optique présentant une dimension caractéristique inférieure, de préférence au moins deux fois inférieure à une dimension caractéristique de l'au moins une deuxième zone de passage optique. Une telle première zone de passage optique est par exemple adaptée à la zone de diffusion frontale du détecteur, qui est plus lumineuse. L'utilisation de motifs fins et résolus pour cette première zone de passage optique associée à la zone de diffusion frontale permet de former un premier diagramme de diffusion proportionnellement fin et résolu. Une telle deuxième zone de passage optique est par exemple adaptée à la zone de rétrodiffusion du détecteur, qui est moins lumineuse. L'utilisation de motifs larges pour cette deuxième zone de passage optique associée à la zone de rétrodiffusion permet d'améliorer la sensibilité de détection des rayons rétrodiffusés, afin d'obtenir un deuxième diagramme de rétrodiffusion.

Selon un exemple, la pluralité de photodétecteurs de la rétine comprend au moins une première zone de photodétecteurs adaptés à recevoir des premières et deuxièmes parties diffusées au travers de l'au moins une première zone de passage optique, et au moins une deuxième zone de photodétecteurs adaptés à recevoir des premières et deuxièmes parties diffusées au travers de l'au moins une deuxième zone de passage optique, la première zone de photodétecteurs comprenant des photodétecteurs différents de ceux de la deuxième zone de photodétecteurs.

Selon un exemple, la première zone de photodétecteurs comprend des photodétecteurs plus petits et plus nombreux que ceux de la deuxième zone de photodétecteurs. Cela permet d'améliorer la résolution de la rétine au niveau de la première zone. Selon un exemple, la première zone de photodétecteurs comprend une densité de photodétecteurs supérieure à celle de la deuxième zone de photodétecteurs.

Selon un exemple, la deuxième zone de photodétecteurs comprend des photodétecteurs plus sensibles que ceux de la première zone de photodétecteurs. Par exemple, les photodétecteurs de la deuxième zone de photodétecteurs ont une taille plus grande, et/ou un gain plus élevé que ceux de la première zone. Cela permet d'améliorer la sensibilité de la rétine au niveau de la deuxième zone.

Selon un exemple, le détecteur comprend en outre des parois opaques reliant le réticule et la rétine et formant au moins un contour fermé de sorte à définir une chambre noire dans laquelle se propagent les première et deuxième parties diffusées. Cette chambre noire n'est ouverte optiquement qu'au niveau de l'au moins une zone de passage optique du réticule. Cette chambre noire limite l'éclairement de la rétine. Cela diminue la probabilité que d'autres rayons, par exemple issus de diffusions parasites, pénètrent la chambre noire et perturbent l'image formée sur la rétine.

Selon un exemple, les surfaces internes des parois de cette chambre noire sont absorbantes.

Selon un exemple, le détecteur comprend en outre au moins un premier filtre chromatique configuré pour filtrer les premières et deuxièmes parties diffusées présentant une première longueur d'onde, et au moins un deuxième filtre chromatique configuré pour filtrer les premières et deuxièmes parties diffusées présentant une deuxième longueur d'onde différente de la première longueur d'onde. Les premier et deuxième filtres chromatiques peuvent par exemple être disposés respectivement au niveau d'une première et d'une deuxième zone de passage optique. Alternativement ou en combinaison, les filtres chromatiques peuvent être disposés respectivement au niveau d'un premier et d'un deuxième motif d'une même zone de passage optique. Ainsi, le motif filtre spécifiquement une couleur de l'éclairage, et le diagramme de diffusion projeté sur la rétine peut être formé par différentes parties chromatiques. Alternativement, les premier et deuxième filtres chromatiques peuvent par exemple être disposés respectivement au niveau d'une première et d'une deuxième zone de photodétecteurs. Selon un autre exemple, le détecteur comprend trois filtres chromatiques (typiquement rouge, vert, bleu) déposés sur trois zones de photodétecteurs de la rétine. Il est ainsi possible d'obtenir trois images qui correspondent aux diagrammes de diffusion relatifs aux trois couleurs.

Le détecteur optique ne comprend pas de lentille entre le réticule et la rétine. Ainsi et de façon avantageuse, aucune lentille convergente n'est requise pour le détecteur. L'absence de telles lentilles permet d'améliorer la compacité du détecteur. Cela permet également d'améliorer la robustesse et/ou la fiabilité du détecteur.

Selon un exemple, dans le système selon l'invention, les première et deuxième directions principales d'émission des première et deuxième sources primaires sont non colinéaires et forment un angle $\alpha$ entre elles.

Selon un autre exemple, dans le système selon l'invention, les première et deuxième directions principales d'émission des première et deuxième sources primaires sont colinéaires et les premiers et deuxièmes rayons lumineux incidents se propagent selon des sens opposés.

Selon un exemple, le système comprend une troisième source émettant des troisièmes rayons lumineux incidents présentant au moins une troisième longueur d'onde différente des première et deuxième longueurs d'onde, et la troisième source primaire présente une troisième direction principale d'émission configurée pour croiser les première et deuxième directions principales d'émission au sein du volume utile de détection. Les première, deuxième et troisième longueurs d'onde sont de préférence prises parmi le rouge, le vert, le bleu et le proche infra-rouge, et le détecteur comprend trois filtres chromatiques filtrant trois couleurs prises de préférence parmi le rouge, le vert, le bleu et le proche infra-rouge.

La présente invention trouve pour domaine préférentiel d'application la détection de particules de diverses tailles, de préférence dans le domaine des particules microscopiques, voire nanométriques. Par exemple la présente invention peut servir à la détection de particules issues de fumées, de poudre d'explosifs, de particules polluantes, de particules de poussière, de particules d'allergènes telles que les pollens, les spores de moisissure, ou encore de particules cancérigènes, ou des particules biologiques telles que des bactéries, des virus, ou encore des exosomes.

La présente invention s'applique à tout type de particules véhiculées par un fluide, que celui-ci soit liquide et/ou gazeux.

Le fluide présent ou s'écoulant dans le volume utile de détection est par exemple de l'air. Tel est le cas pour les détecteurs intégrés dans les systèmes suivants : un système d'alarme anti-incendie, un système de détection d'incendie, un système de détection de poudre d'explosifs, un système d'analyse de la qualité d'un fluide tel que l'air, un système d'alarme anti-pollution.

Alternativement, le fluide peut être un liquide tel que de l'eau. Tel est le cas pour les détecteurs intégrés dans les systèmes de détection d'espèces microbiologiques.

La présente invention vise en particulier à réaliser simultanément des diagrammes de diffusion de plusieurs particules, au sein d'un détecteur fabriqué à l'aide des technologies classiques de micro-fabrication. Il est entendu que ce détecteur peut, le cas échéant, réaliser un diagramme de diffusion d'une seule particule.

Dans le cadre de la présente invention, le terme « particule » ou ses équivalents a pour définition un constituant d'un système physique considéré comme élémentaire par rapport aux propriétés étudiées.

Le terme particule désigne en particulier un objet solide, liquide ou solide mouillé en suspension dans un fluide tel que l'air et dont la taille est microscopique. Par exemple, une particule est un élément de matière dont la plus grande dimension est inférieure à quelques millimètre ($10^{-3}$ mètres), de préférence à un millimètre, et de préférence à quelques dizaines de micromètres ($10^{-6}$ mètres) et de préférence inférieure au micromètre, voire de l'ordre du nanomètre ($10^{-9}$ m). Plus généralement, les particules présentent une taille supérieure à 40 Å ($10^{-10}$ m) et sont donc considérées comme optiquement continue. De manière générale, il s'agit d'objets composés de matière dont les dimensions sont petites par rapport aux dimensions de la cavité ou du canal de circulation des particules.

On entend par « taille » ou « diamètre » d'une particule la distance maximale entre deux points de la particule. Typiquement, on assimile une particule à un objet de géométrie sphérique, sa taille correspond donc au diamètre de la sphère.

Dans ce qui suit, le terme « absorption » ou ses équivalents se réfère au phénomène par lequel l'énergie d'une onde électromagnétique est transformée en une autre forme d'énergie, par exemple par dissipation thermique. Dans la présente description, un matériau est considéré comme absorbant dès lors qu'il absorbe au moins 50% d'un rayonnement lumineux, de préférence au moins 75% et avantageusement au moins 90%. Il peut être caractérisé par un facteur d'absorption compris entre 0 et 1.

Dans ce qui suit, le terme « diffusion » ou ses équivalents se réfère au phénomène par lequel un milieu de propagation produit une répartition, dans de nombreuses directions, de l'énergie d'une onde électromagnétique, lumineuse par exemple.

Dans ce qui suit, le terme « réflexion » ou ses équivalents se réfère au phénomène de réémission depuis un élément ou une surface d'un rayonnement lumineux incident. Dans la présente description, un élément est considéré comme réfléchissant dès lors qu'il réémet une partie au moins d'un rayonnement lumineux incident, cette partie étant supérieure ou égale à 50%. Il peut être caractérisé par un facteur de réflexion compris entre 0 et 1.

Le détecteur selon l'invention comprend un « réticule ». Ce réticule désigne une surface comprenant au moins une zone de passage optique, de préférence transparente, et au moins une zone de blocage optique, de préférence opaque. Dans la suite de la description, la zone de passage optique du réticule est également désignée par les termes « surface transparente », « ouverture optique » ou « ouverture », par souci de concision. Ces dénominations sont équivalentes et désignent une interface, une surface ou un volume à travers lequel des rayons lumineux peuvent passer. L'ouverture optique peut être une ouverture physique formée d'air ou de vide ou être emplie d'un matériau transparent. Dans la suite, la zone de blocage optique du réticule est désignée par les termes « surface opaque ». Ces dénominations sont équivalentes et désignent une interface, une surface ou un volume à travers lequel des rayons lumineux sont bloqués.

Une surface est dite « opaque » lorsqu'elle n'est pas traversée par un rayonnement lumineux de longueur d'onde donnée ou qu'elle est traversée par moins de 10% et de préférence par moins de 5 % de ce rayonnement lumineux. Ce rayonnement est par exemple absorbé par la surface opaque. Alternativement, ce rayonnement peut être réfléchi de manière spéculaire ou diffusé par la surface opaque. Ces trois phénomènes ne s'excluent pas mutuellement.

La surface opaque peut être formée par dépôt d'une couche en un matériau réfléchissant, par exemple de l'or ou du silicium-aluminium (AlSi). Alternativement, la surface opaque peut être formée par dépôt d'une couche en un matériau absorbant, par exemple de la résine noire ou du graphite colloïdal. Elle peut aussi être formée en collant un film adhésif (noir ou réfléchissant) découpé pour former l'ouverture.

L'espace d'épaisseur Z compris entre le réticule sombre et le détecteur est de préférence transparent. Cet espace est par exemple formé de vide ou d'air. Alternativement il peut comprendre ou être constitué d'un matériau transparent, par exemple du verre ou un polymère transparent.

On entend par un matériau « transparent à une longueur d'onde donnée » ou simplement « transparent » un matériau laissant passer au moins 90% de l'intensité lumineuse de la lumière présentant cette longueur d'onde.

L'ouverture optique transparente peut être formée par un sténopé ou une fente. Un sténopé est un trou de très faible diamètre et de très faible épaisseur. Un très faible diamètre est par exemple compris entre 5 $\mu$m et 500 $\mu$m. Une très faible épaisseur est par exemple comprise entre 100 nm et 100 $\mu$m. Une fente est caractérisée par sa largeur et sa longueur, et éventuellement par sa courbure. La largeur est par exemple comprise entre 5 $\mu$m et 500 $\mu$m. La longueur est par exemple comprise entre 500 $\mu$m et 2 mm.

Dans la présente demande, le diamètre, la largeur et la longueur sont prises selon des directions transversales à l'axe optique O, dans le plan du réticule sombre. Ainsi, ces directions transversales sont prises dans des plans sensiblement parallèles à la face de la rétine tournée au regard du réticule sombre. Le diamètre ou la largeur correspondent à la dimension a de l'ouverture optique. L'épaisseur ou la profondeur sont prises selon l'axe optique O.

La rétine se présente de préférence typiquement sous forme d'une matrice de photodétecteurs constituant des pixels du détecteur.

Le « volume utile », ou « volume utile de détection » est l'intersection entre le ou les faisceau(x) d'éclairage et le volume de présence probable de particules que l'on parvient à détecter avec le détecteur. Autrement dit c'est le volume défini par l'intersection entre le faisceau d'éclairage, le faisceau de particules, et le champ de vue du détecteur. C'est le volume qui sert à la détection.

Dans la présente demande, le faisceau est notamment configuré pour éclairer des particules hors axe optique O. Selon un exemple le faisceau est configuré pour éclairer des particules hors axe optique O, de sorte que le volume utile de détection présente une extension latérale d'au moins 50 $\mu$m environ, voire d'au moins 100 $\mu$m par rapport à l'axe optique du détecteur. Le faisceau peut ainsi typiquement présenter une taille de faisceau de quelques dizaines de $\mu$m à quelques centaines de $\mu$m.

Le champ de vue est l'angle solide pour lequel le détecteur est sensible aux rayonnements électromagnétiques.

Dans le cadre de la présente invention, un diagramme lumineux exprime ou illustre la répartition spatiale d'un paramètre qui est fonction de l'intensité lumineuse reçue par les photodétecteurs de la rétine. Ainsi, un diagramme lumineux peut-être une représentation d'un tel paramètre en fonction de la position sur un axe ou sur un plan ou plus généralement sur une surface plane ou courbe portant les photodétecteurs. Le paramètre exprimé peut par exemple être l'intensité lumineuse ou être proportionnel à l'intensité lumineuse.

Pour chaque particule diffusante, le diagramme de diffusion reçu par les photodétecteurs est typiquement issu du produit de convolution du diagramme de diffusion de la particule par la figure (tache ou ombre) projetée sur la rétine au travers du réticule.

Le réticule est dit réticule sombre lorsque la zone de passage optique forme au moins une ouverture délimitée par la zone de blocage optique. Dans ce cas, le rapport des surfaces opaques sur les surfaces transparentes est supérieur à 1, de préférence très supérieur à 1. La ou les surfaces opaques du réticule occupent une majorité de la surface totale du réticule. Le réticule est donc « sombre » et comprend une ou plusieurs ouvertures optiques.

Le réticule est dit réticule clair lorsque la zone de passage optique forme au moins une ouverture entourant la zone de blocage optique. Dans ce cas, le rapport des surfaces transparentes sur les surfaces opaques est supérieur à 1, de préférence très supérieur à 1. La ou les surfaces transparentes du réticule occupent une majorité de la surface totale du réticule. Le réticule est donc « clair » et comprend une ou plusieurs zones de blocage optique.

Dans le cas d'un réticule sombre, la périphérie de la figure (tache) entoure le premier ensemble de photodétecteurs. Le premier ensemble de photodétecteurs est circonscrit à l'intérieur de la figure.

Dans le cas d'un réticule clair, la périphérie de la figure (ombre) est entourée par le premier ensemble de photodétecteurs. Ainsi, la disposition du premier ensemble de photodétecteurs est le négatif de la figure (ombre).

Le ou les faisceau(x) d'éclairage sont émis par une ou des source(s) primaire(s) correspondante(s). Ces sources primaires peuvent être polychromatiques ou monochromatiques. La lumière émise par ces sources appartient de préférence au domaine visible étendu au proche ultra-violet et au proche infrarouge, c'est-à-dire pour une gamme de longueur d'onde comprise entre 300 et 1000 nm. La « longueur d'onde » de la source ou la « première longueur d'onde » de la première source désignent des longueurs d'onde d'intérêt.

Dans le cas d'une source polychromatique, cette longueur d'onde d'intérêt peut être la longueur d'onde la plus intense émise par la source. Elle peut également s'entendre d'une gamme de longueurs d'ondes de quelques dizaines de nanomètres, par exemple de l'ordre de 100nm, de préférence de l'ordre de 50nm.

Dans le cas d'une source monochromatique ou quasi-monochromatique, la longueur d'onde d'intérêt est l'unique longueur d'onde émise par cette source ou la longueur d'onde principalement émise par cette source.

Dans la suite, cette longueur d'onde d'intérêt est également désignée « couleur », pour faciliter la lecture de la description. Cette définition de couleur ne correspond pas directement aux couleurs de l'arc-en-ciel (spectre électromagnétique du visible). Elle inclut en particulier des « couleurs » des domaines du proche infrarouge et du proche UV, et/ou exclut des couleurs issues du mélange de couleurs disjointes du spectre électromagnétique telles que les pourpres par exemple.

On entend par un élément structurel, une couche, « à base » d'un matériau A, un élément structurel, une couche comprenant ce matériau A uniquement ou ce matériau A et éventuellement d'autres matériaux, par exemple des éléments dopants ou des éléments d'alliage. Ainsi, si un bloc transparent est désigné comme étant « à base de polymères », cela signifie qu'il peut être formé uniquement de polymères ou de polymères et éventuellement d'autres matériaux, par exemple un oxyde inorganique.

Il est précisé que dans le cadre de la présente invention, le terme « sur », « surmonte », « recouvre » ou « sous-jacent » ou leurs équivalents ne signifient pas « au contact de ». Ainsi par exemple, le dépôt d'un revêtement sur un élément structurel, ne signifie pas obligatoirement que ceux-ci sont directement au contact l'un de l'autre mais cela signifie que le revêtement recouvre au moins partiellement l'élément structurel en étant soit directement à son contact, soit en étant séparé de celui-ci par au moins une autre couche ou au moins un autre élément.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif. En particulier, le nombre d'ouvertures, les différents motifs d'ouvertures et/ou les différentes formes de canaux illustrés sur les figures peuvent être combinés de manière à former un autre mode de réalisation qui n'est pas nécessairement illustré ou décrit. Un tel mode de réalisation n'est évidemment pas exclu de l'invention.

Les termes « sensiblement », « environ », « de l'ordre de » signifient « à 10% près » ou, lorsqu'il s'agit d'une orientation angulaire, « à 10° près » et de préférence « à 5° près ». Ainsi, une direction sensiblement normale à un plan signifie une direction présentant un angle de $90\pm10°$ par rapport au plan.

Pour déterminer les propriétés optiques du détecteur, des mesures d'opacité (spectres absorption et/ou réflexion), de transparence (spectre de transmission), de champ de vue (angle solide de détection) peuvent être effectuées. On utilisera par exemple des techniques de spectrométrie et des techniques de sphère intégrante pour réaliser ces mesures.

Des méthodes de simulation, par exemple par calcul de lancer de rayons par méthode de Monte Carlo, peuvent également permettre de déterminer le ou les diagramme(s) de diffusion obtenu(s) au travers d'un détecteur. La séparation effective des diagrammes de diffusion issus de plusieurs particules détectées simultanément peut être un indice de la mise en oeuvre d'un détecteur tel que décrit dans la présente invention.

Un premier exemple simplifié de détecteur selon l'invention va maintenant être décrit en référence à la figure 3, pour en comprendre le principe de fonctionnement.

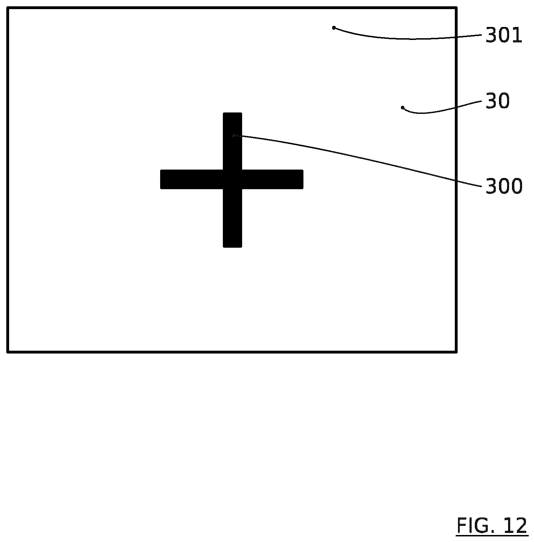

Par souci de clarté, le cas d'une ouverture dans le réticule donnant lieu à des taches T1, T2 (réticule sombre) sera plus particulièrement décrit. Le cas d'une surface sombre dans le réticule (réticule clair) donnant lieu à des ombres B1, B2, qui peut être considéré comme un négatif du premier cas, peut être facilement déduit de ce premier cas décrit ci-dessous. Ce cas avec réticule clair sera décrit en détail, par exemple en référence aux figures 12 à 13C.

Comme illustré sur le schéma de la figure 3, le détecteur 1 est destiné à détecter au moins deux particules $10_1$, $10_2$ au sein d'un volume utile 100. Ce volume utile 100 est une zone de l'espace qui reçoit un éclairage et où circulent les particules $10_1$, $10_2$. Les possibilités et conditions d'éclairage de ce volume utile 100 sont décrites dans la section « faisceau d'éclairage » plus loin dans la description. La zone de l'espace peut être libre ou délimitée par des éléments matériels. Elle peut notamment s'étendre au sein d'un canal de transport de particules ou vers une embouchure d'un tel canal, par exemple au niveau d'un orifice de sortie de ce canal. Certains modes de réalisation du détecteur comprenant un tel canal sont décrits dans la section « canal traversant » plus loin dans la description.

Lorsque les particules $10_1$, $10_2$ se trouvent dans le volume utile 100, elles reçoivent des rayons lumineux incidents émis par une source primaire (non illustrée), puis émettent à leur tour des rayons lumineux diffusés $kd_1$, $kd_2$. Ces deux particules $10_1$, $10_2$ forment dès lors des sources secondaires 21, 22 qui éclairent le détecteur 1.

Le terme source primaire n'est pas limitatif d'un certain type de source. Cette source primaire peut être une source de lumière générant elle-même de lumière dans le volume utile 100. Il peut également s'agir d'un dispositif comprenant une source générant de la lumière et associée à un dispositif optique de guidage de la lumière jusque dans le volume utile 100 et/ou d'un dispositif de formation d'un faisceau comprenant des rayons lumineux traversant le volume utile 100.

Le détecteur 1 est configuré pour filtrer et recevoir une partie des rayons lumineux diffusés $kd_1$, $kd_2$. Il comprend avantageusement un réticule 30 pour filtrer les rayons lumineux diffusés $kd_1$, $k_{d2}$, et une rétine 20 pour recevoir les seuls rayons $kd_1$, $k_{d2}$ filtrés par le réticule 30.

Le réticule 30 comprend une surface opaque 300 et au moins une ouverture optique 301. Dans l'exemple illustré l'ouverture optique 301 présente une surface très inférieure à la zone de blocage optique. Le réticule est de type réticule sombre. Il est de préférence plan et parallèle à la rétine 20. Les exemples de réalisation du détecteur décrits et illustrés dans la suite sont basés sur un tel réticule sombre plan et parallèle à la rétine, de façon à faciliter la compréhension de l'invention. Le réticule et/ou la rétine peuvent alternativement présenter une courbure. Dans ce cas, une direction perpendiculaire à la rétine signifie une direction perpendiculaire à la tangente à la rétine au point considéré, par exemple à l'intersection entre la rétine et l'axe optique. Le réticule et la rétine peuvent ne pas être parallèles entre eux. Par exemple, une rétine courbe et un réticule courbe formant des portions de sphères concentriques dont le centre est positionné au niveau du volume utile peuvent être mis en oeuvre au sein d'un détecteur selon l'invention. Dans ce cas, les exemples de réalisation et de dimensionnement du détecteur peuvent être adaptés *mutatis mutandis.*

L'ouverture 301 est configurée pour laisser passer une partie 31 des rayons diffusés $k_{d1}$ et une partie 32 des rayons diffusés $kd_2$. Les caractéristiques de cette ouverture 301, en particulier sa forme et son dimensionnement, sont décrites dans les sections correspondantes « forme de l'ouverture » et « dimensionnement de l'ouverture ».

Les parties diffusées 31, 32 forment respectivement avec l'axe optique O du détecteur les angles $\theta_j$, $\theta_i$. La distance angulaire entre les particules $10_1$, $10_2$, soit l'angle formé par les parties diffusées 31, 32 pénétrant dans l'ouverture 301 est notée $\theta_{ij} = \theta_j + \theta_i$. $\theta$, $\theta_j$ et $\theta_i$ sont référencées en figure 3.

Les parties 31, 32 sont projetées sur la rétine 20, et forment respectivement les diagrammes de diffusion $S_1(\theta_j)$, $S_2(\theta_i)$, également notés $S_1$ et $S_2$ par souci de concision. Leurs positions respectives sur la rétine 20 dépendent des angles $\theta_j$, $\theta_i$. De préférence, ces diagrammes de diffusion $S_1(\theta_j)$, $S_2(\theta_i)$ présentent chacun un pic lumineux, référencés respectivement $S_{1pic}$ et $S_{2pic}$ sur cet exemple, $L_{Bases}$ étant la distance entre les bases $BS_1$, $BS_2$ de ces pics $S_{1pic}$ et $S_{2pic}$, $L_{Sommets}$ étant la distance entre les sommets $PS_{1pic}$, $PS_{2pic}$ de ces pics $S_{1pic}$ $S_{1pic}$. La distance entre les taches T1, T2 formées par la projection sur la rétine 20 des première et deuxième parties diffusées est notée Ls.

Le détecteur, en particulier la dimension minimale de l'ouverture 301 ainsi que la distance minimale Z prise selon l'axe optique O entre le réticule 30 et la rétine 20 est configuré de sorte à pouvoir distinguer les taches T1, T2 et les diagrammes de diffusion $S_1(\theta_j)$, $S_2(\theta_i)$.

Ainsi, lorsque les particules sont suffisamment éloignées (typiquement lorsqu'elles définissent ensemble un angle $\theta_{ij}$ dont la valeur est au moins égale à la résolution angulaire $\delta\theta$ du détecteur) les distances Ls, $L_{Bases}$ et $L_{Sommets}$ sont non nulles. Par ailleurs, le pas Lpix des photodétecteurs de la rétine 20 est suffisamment faible pour que ces distances Ls, $L_{Bases}$ et $L_{Sommets}$ permettent aux photodétecteurs d'identifier séparément les taches T1, T2 et les diagrammes de diffusion $S_1(\theta_j)$, $S_2(\theta_i)$ lorsque $\theta_{ij} \geq \delta\theta$.

Cette résolution angulaire $\delta\theta$ correspond au plus petit écart angulaire $\theta_{ij} = \theta_j + \theta_i$ entre les deux particules diffusantes $10_1$, $10_2$ que le détecteur est capable de détecter. Si $\theta_{ij} \geq \delta\theta$, alors les distances Ls, $L_{Bases}$ et $L_{Sommets}$ sont non nulles et le détecteur 1 est capable de discriminer les deux taches T1, T2 ou les deux pics $S_{1pic}$ et $S_{2pic}$. Le détecteur 1 identifiera la présence de chacune des deux particules $10_1$, $10_2$.

Par exemple pour une ouverture 301 séparée de la rétine 20 d'une distance Z, la distance minimale de séparation $L_{Sommets}$ est égale à : $L_{Sommets} = Z(\tan \theta_i + \tan \theta_j)$. La distance de séparation $L_{Sommets}$ minimale permettant de distinguer sur la rétine 20 les diagrammes de diffusion $S_1(\theta_j)$, $S_2(\theta_i)$ correspond à la résolution linéaire du détecteur 1.

Le dimensionnement du détecteur 1 en fonction de la résolution souhaitée est décrit plus en détail dans la section « dimensionnement du détecteur ». Un procédé de fabrication d'un tel détecteur 1 est également décrit dans la section correspondante « procédé de fabrication ».

Selon une possibilité illustrée à la figure 4, le réticule 30 du détecteur 1 comprend plusieurs ouvertures 301, 302. Cela permet d'obtenir un diagramme de diffusion enrichi pour chacune des particules diffusantes. Par souci de clarté, une seule particule $10_1$ est représentée sur la figure 4. Cette particule $10_1$ diffuse une première partie $31_1$ de rayons lumineux à travers la première ouverture 301, et une deuxième partie $31_2$ de rayons lumineux à travers la deuxième ouverture 302. Ces première et deuxième parties $31_1$, $31_2$ forment un diagramme de diffusion $S_1(\theta_1, \theta_2)$. Le diagramme de diffusion $S_1(\theta_1, \theta_2)$ peut comprendre plusieurs portions discrètes, par exemple les taches $S_1(\theta_1)$ et $S_1(\theta_2)$ vues à travers les ouvertures 301, 302 respectivement sous les angles $\theta_1$, $\theta_2$.

Ce diagramme de diffusion enrichi $S_1(\theta_1, \theta_2)$ permet notamment de déterminer la position de la particule 10, au sein du volume utile de détection. Cette position correspond, selon le principe de retour inverse de la lumière, au croisement des rayons lumineux formant les parties $31_1$, $31_2$.

Dans ce cas avec plusieurs ouvertures 301, 302, les distances Ls, $L_{Bases}$ et $L_{Sommets}$ correspondent aux distances entre les taches, les bases et les sommets des diagrammes de diffusion formés par les rayons diffusés par deux particules au travers de l'une seulement des ouvertures 301, 302.

Forme de l'ouverture et/ou de la surface sombre

Par souci de clarté, différentes formes d'une seule ouverture sont décrites dans cette section. Il est entendu que ces formes peuvent être appliquées à plusieurs ouvertures et/ou surfaces sombres. Plusieurs ouvertures et/ou surfaces sombres peuvent en outre combiner différentes formes en fonction des différents avantages associés à chaque forme.

Une forme peut être transparente (cas des ouvertures) ou opaque (cas des surfaces sombres). Ainsi, un sténopé peut être un disque transparent ou un trou (cas des ouvertures) ou un disque opaque (cas des surfaces sombres). Chaque forme ou motif peut ainsi être adapté *mutatis mutandis* au cas considéré.

Les schémas simplifiés illustrés par les figures 3 et 4 sont basés sur des ouvertures 301, 302 simples en forme de trous, ou sténopés. Le motif de sténopé permet de projeter sur la rétine une tache T1, T2 ponctuelle pour chaque particule diffusante. Le diagramme de diffusion correspondant comprend ainsi une portion en forme de pic $S1_{pic}$, $S2_{pic}$ pour chacune des particules, permettant par exemple de faciliter l'interprétation du diagramme de diffusion.

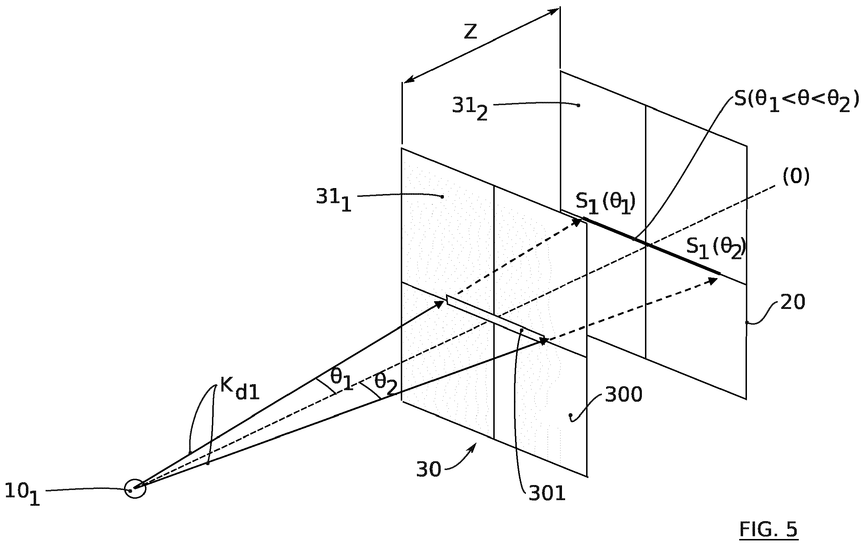

La figure 5 illustre une ouverture 301 sous forme de fente. Ce motif de fente permet d'obtenir un diagramme de diffusion enrichi pour chaque particule diffusante. Par souci de clarté, une seule particule $10_1$ est représentée sur la figure 5. Cette particule $10_1$ diffuse une pluralité de rayons lumineux à travers la première ouverture 301. Les rayons lumineux reçus par la rétine 20 sont compris entre les parties $31_1$ et $31_2$ passant par chacune des extrémités de la fente. Ces rayons lumineux compris entre les parties $31_1$, $31_2$ forment un diagramme de diffusion $S_1(\theta_1 < \theta < \theta_2)$. Ce diagramme de diffusion $S_1$ $(\theta_1 < \theta < \theta_2)$ comprend de préférence une portion continue, formée par un continuum de taches $S_1(\theta)$ vues à travers l'ouverture 301 sous un continuum d'angles de diffusion $\theta$ compris entre $\theta_1$ et $\theta_2$.

La fente n'est pas forcément rectiligne, elle peut être curviligne.

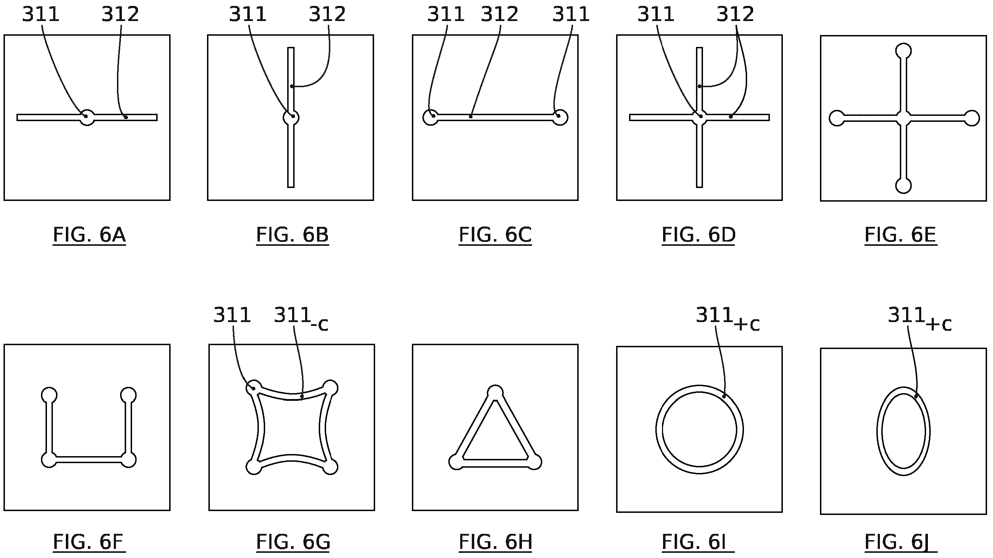

Les figures 6A à 6J illustrent différentes formes possibles pour une ouverture du réticule. Ces formes sont typiquement des combinaisons de fentes et de sténopés, enrichissant et facilitant la lecture des diagrammes de diffusion correspondants. Toutes les formes ci-dessous peuvent être combinées et/ou reproduites plusieurs fois pour former une ou plusieurs ouvertures et/ou surfaces sombres d'un même détecteur. Le détecteur selon l'invention n'est pas limité aux seuls exemples de formes mentionnées ci-dessous à titre d'exemple. D'autres formes d'ouvertures et/ou de surfaces sombres sont envisageables.

Les figures 6A et 6B illustrent une forme résultant de la combinaison d'un motif de fente 312 rectiligne et d'un motif de sténopé 311, situé par exemple au centre du motif de fente 312. La fente peut être orientée selon la direction du continuum d'angles de diffusion que l'on souhaite détecter et analyser, par exemple une direction horizontale (figure 6A) ou une direction verticale (figure 6B).

La figure 6C illustre une forme résultant de la combinaison d'un motif de fente 312 rectiligne et de plusieurs motifs de sténopé 311, par exemple deux sténopés situés aux extrémités du motif de fente 312.

La figure 6D illustre une forme résultant de la combinaison des motifs des figures 6A et 6B. Cette forme permet de détecter et d'analyser des continuums d'angles de diffusion dans des directions orthogonales, par exemple les directions horizontale et verticale. La forme de la figure 6D comprend deux fentes 312 rectilignes qui se croisent, de préférence en leur milieu, et de préférence en formant un angle droit. Un sténopé 311 est formé à l'intersection des deux fentes 312.

Les figures 6E et 6F illustrent des formes résultant de la combinaison de plusieurs motifs de fente 312 rectilignes et de plusieurs motifs de sténopé 311. La forme de la figure 6E ajoute à celle de la figure 6D un sténopé à chacune des extrémités des fentes 311. La forme de la figure 6F comprend plusieurs fentes rectilignes juxtaposées les unes aux autres au niveau de leurs extrémités et avec un sténopé à chacune de leur extrémité. Le contour formé par cette succession de fentes et de sténopés peut être ouvert et former par exemple trois segments orthogonaux deux à deux. Alternativement, ce contour peut être fermé.

La figure 6G illustre une forme résultant de la combinaison de plusieurs motifs de fente $311_{-c}$ curvilignes et de plusieurs motifs de sténopé 311. Les motifs de fente $311_{-c}$ curvilignes présentent ici une courbure dite négative, c'est-à-dire s'étendant vers le centre du réticule ou de l'ouverture. Une telle courbure négative permet de compenser une déformation induite par le milieu compris entre le réticule 30 et la rétine 20, dans le cas où ce milieu présente un indice de réfraction $n_+$ supérieur à celui où se situe la particule diffusante. Cette forme permet par exemple de projeter sur la rétine 20, en présence de ce milieu d'indice de réfraction $n_+$, un diagramme similaire à celui projeté par la forme illustrée en figure 6F, en l'absence de ce milieu d'indice de réfraction $n_+$. La géométrie de cette forme a donc un effet « redresseur » sur la projection du diagramme de diffusion sur la rétine.

La figure 6H illustre une forme résultant de la combinaison de plusieurs motifs de fente 312 rectilignes et de plusieurs motifs de sténopé 311. Dans cet exemple, les directions des continuums d'angles de diffusion à détecter ne sont pas orthogonales. Les fentes sont rectilignes et sont juxtaposées de sorte à former un contour fermé. Un sténopé est formé à chaque juxtaposition de deux fentes adjacentes. Sur cet exemple, le contour fermé est un triangle, équilatéral dans cet exemple non limitatif.

De façon générale, les formes illustrées par les figures 6C, 6E, 6F, 6G, 6H permettent de faciliter la lecture du diagramme de diffusion projeté sur la rétine. En particulier, des diagrammes de diffusion comprenant une pluralité de taches circulaires telles qu'obtenues à travers une pluralité de sténopés sont facilement identifiables à l'aide d'algorithmes de reconnaissances de forme.

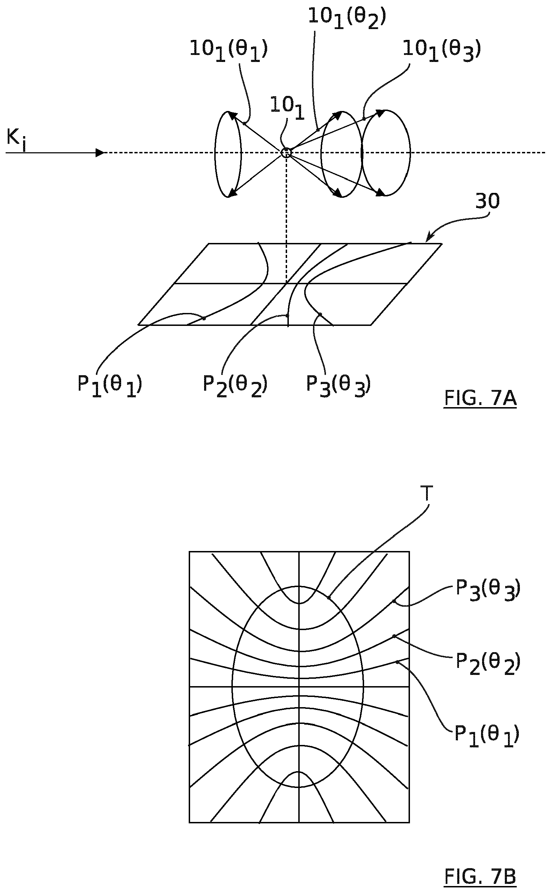

Les figures 6I et 6J illustrent des formes comprenant des motifs de fente $311_{+c}$ curvilignes présentant une courbure dite positive, c'est-à-dire s'étendant vers la périphérie du réticule ou de l'ouverture. Une telle forme peut présenter un contour fermé, tel qu'un anneau (figure 6I) ou une ellipse (figure 6J) par exemple. Une forme d'ouverture en anneau permet en particulier d'observer des alternances de Mie, qui se présentent sous forme de lobes dans le diagramme angulaire de diffusion, selon la théorie de Mie. Une forme d'ouverture en ellipse permet d'optimiser l'observation des alternances de Mie, en particulier lorsque les rayons incidents éclairant la particule diffusante sont sensiblement parallèles au plan dans lequel s'étend le réticule, tel qu'illustré à la figure 7A.

Dans ce cas, les rayons $10_1(\theta_1)$, $10_1(0_2)$, $10_1(0_3)$ diffusés respectivement selon un angle $\theta_1$, $\theta_2$, $\theta_3$ forment des cônes coaxiaux autour de la direction des rayons incidents $k_i$. Ces cônes dits « iso-$\theta$ » sont projetés sur le réticule 30 respectivement selon des hyperboles $P_1(\theta_1)$, $P_2(\theta_2)$, $P_3(\theta_3)$ (sur la figure 7A, les hyperboles illustrées ne correspondent pas exactement aux rayons projetés, pour des raisons de clarté). Ces hyperboles $P_1(\theta_1)$, $P_2(\theta_2)$, $P_3(\theta_3)$ « iso-$\theta$ » sont le lieu des lobes de Mie. Une fente suivant une trajectoire T orthogonale aux hyperboles « iso-$\theta$ » est donc optimisée pour l'observation des alternances de ces lobes de Mie. Dans le cas des hyperboles $P_1(\theta_1)$, $P_2(\theta_2)$, $P_3(\theta_3)$, cette trajectoire T est une ellipse (figure 7B).

De façon générale, l'ouverture et/ou la surface sombre peuvent présenter une combinaison quelconque de motifs de sténopé, de fente rectiligne, de fente curviligne négative, et de fente curviligne positive.

## Dimensionnement de l'ouverture et/ou de la surface sombre

La taille caractéristique ou dimension a de l'ouverture et/ou de la surface sombre est une dimension linéaire : elle est par exemple le diamètre d'un trou circulaire ou la largeur d'une fente.

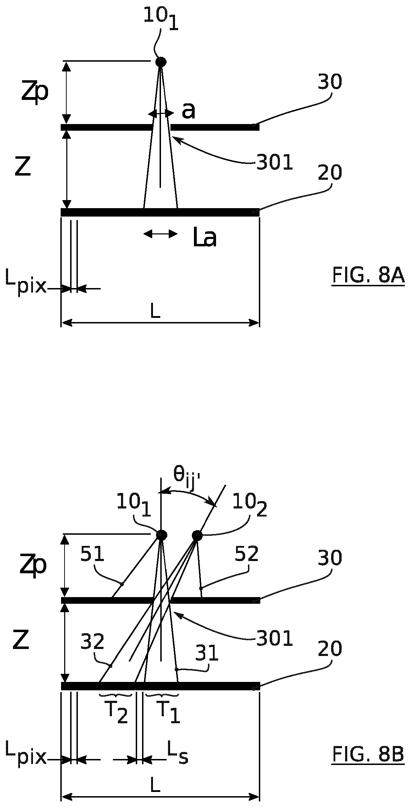

L'ouverture est de préférence suffisamment grande pour obtenir une bonne résolution des diagrammes de diffusion projetés. Tel qu'illustré à la figure 8A, pour une particule 10, située à une distance Zp du réticule 30 du détecteur, le diagramme de diffusion de cette particule ou la tache projetée sur la rétine 20 à travers une ouverture 301 de dimension a présente une dimension La. Cette dimension La dépend de la dimension a, de la distance Z séparant le réticule 30 de la rétine 20, et de la distance Zp séparant la particule 10, du réticule 30. En particulier, La = a*(Z+Zp)/Zp.

Z et Zp sont mesurées selon des directions parallèles à l'axe optique (O). Z et Zp sont mesurées selon des directions perpendiculaires à un plan dans lequel s'étend principalement la rétine 20 ou plus exactement une face de la rétine 20 tournée au regard du réticule 30.

Pour Z et Zp donnés, la dimension a est choisie telle que La > Lpix, Lpix étant le pas entre deux photodétecteurs adjacents, soit un pas de pixel de la rétine. De préférence, la dimension a est choisie telle que La soit comprise entre 1 et 20 pas de pixel (1.Lpix < La < 20.Lpix), et de préférence telle que La soit environ égale à 10 pas de pixel (La ≈ 10.Lpix). Le détecteur présente ainsi une bonne résolution linéaire.

L'ouverture est de préférence également suffisamment petite pour éviter une superposition des diagrammes de diffusion projetés. Tel qu'illustré à la figure 8B, pour deux particules $10_1, 10_2$ présentant un écart angulaire $\theta_{ij}$ (avec $\theta_{ij} \geq \delta\theta$, $\delta\theta$ étant la résolution du détecteur) et situées à une distance Zp du réticule 30, les taches T1, T2 projetés sur la rétine 20 à travers l'ouverture 301 de dimension a sont séparés par une distance Ls. La dimension a est choisie telle que Ls soit de préférence supérieure ou égale à 2*Lpix et de préférence Ls $\geq$ 5*Lpix et de préférence Ls $\geq$ 10.Lpix. Les taches T1 et T2 sont ainsi clairement distinctes sur la rétine 20. Il est alors possible d'identifier séparément ces taches et les diagrammes de diffusion correspondant. Le comptage des particules $10_1$, $10_2$ ainsi que leur analyse est ainsi aisée.

Le dimensionnement de l'ouverture dépend donc des distances Z et Zp, de la résolution angulaire $\delta\theta$ du détecteur 1 et de la distance de séparation Ls :

$$a = (Z.tan(\delta\theta) - L_s)\frac{Z_p}{Z + Z_p}$$

Dans le cas d'une ouverture présentant une combinaison de motifs de fente et de sténopé, la largeur de la fente est de préférence deux fois plus petite que le diamètre du sténopé. Dans ce cas, la dimension a correspond à la largeur de la fente. De façon générale, la dimension a est la plus petite parmi le diamètre du sténopé et la largeur de la fente.

Dans le cas d'une pluralité d'ouvertures, la surface totale de ces ouvertures, prise dans le plan du réticule sombre, est de préférence inférieure à 50% de la surface du réticule sombre, et de préférence inférieure à 10% de la surface du réticule sombre. Cela permet de limiter sur la rétine les zones de superposition des diagrammes de diffusion projetés aux travers de ces ouvertures. La lisibilité des diagrammes de diffusion est améliorée.

Cette capacité du détecteur 1 à identifier de manière distincte le diagramme de diffusion S1, S2 de chaque particule particules $10_1$, $10_2$ peut également être caractérisée par rapport à la distance $L_{Bases}$ exprimant le décalage entre les bases $BS_1$, $BS_2$ de chaque diagramme de diffusion S1, S2 formé par un même motif de l'ouverture 301.

Ainsi, on peut prévoir que la distance minimale Z et que l'ouverture 301, en particulier la dimension a, soient configurées pour que $L_{Bases} \geq 2*Lpix$ lorsque les première 31 et deuxième 32 parties diffusées passant à travers l'ouverture 301 définissent ensemble un angle $\theta_{ij} \geq \delta\theta$. De préférence, $L_{Bases} \geq 5*Lpix$. De préférence, $L_{Bases} \geq 10*Lpix$.

De préférence, la base $BS_1$, $BS_2$ est mesurée à une hauteur du pic $S_{1pic}$,$S_{2pic}$ égale à 10% de la hauteur $HS_1$, $HS_2$ du sommet $SS_1$, $SS_2$, et de préférence situé à une hauteur du pic $S_{1pic}$,$S_{2pic}$ égale à 5% de la hauteur du sommet $SS_1$, $SS_2$. Les hauteurs $HS_1$, $HS_2$ des sommets $SS_1$, $SS_2$ sont illustrées en figures 3.

Cette capacité du détecteur 1 à identifier de manière distincte le diagramme de diffusion S1, S2 de chaque particule particules $10_1$, $10_2$ peut également être caractérisée par rapport à la distance $L_{Sommets}$ exprimant le décalage entre les sommets $SS_1$, $SS_2$ des diagrammes de diffusion S1, S2.

Ainsi, on peut prévoir que la distance minimale Z et que l'ouverture 301 soient configurées pour que $L_{Sommets} \geq 10*Lpix$ lorsque les première 31 et deuxième 32 parties passant à travers l'ouverture 301 définissent ensemble un angle $\theta_{ij} \geq \delta\theta$. De préférence, $L_{Sommets} \geq 20*Lpix$.

### Dimensionnement du détecteur

Le détecteur est notamment caractérisé par sa résolution angulaire $\delta\theta$, par la distance Z séparant le réticule sombre 30 de la rétine 20, par son champ de vue FOV et la dimension L de la rétine, et par la distance Zp séparant le volume utile de détection 100 du réticule sombre 30.

La résolution angulaire du détecteur est de préférence de l'ordre de 2°.

La rétine comprend une pluralité de photodétecteurs formant des pixels. Un pas de pixel Lpix est typiquement de l'ordre de quelques microns, par exemple $0.5\ \mu m < Lpix < 20\ \mu m$. La rétine est de préférence un imageur de type CMOS. La largeur L de la rétine est typiquement de l'ordre de quelques millimètres, par exemple $1\ mm < L < 5mm$.

Le champ de vue FOV dépend de la distance Z et de la largeur L de la rétine, tel que $FOV = atan(L/2Z)$.

Le champ de vue FOV est typiquement de l'ordre de quelques dizaines de degrés, par exemple

$30° < FOV < 90°$, de préférence FOV est de l'ordre de 60°. Ce champ de vue peut être choisi en fonction du volume utile de détection souhaité. En particulier, tout le volume utile de détection est de préférence compris dans ce champ de vue FOV. La distance Z peut donc être adaptée en fonction de la distance Zp séparant le volume utile de détection du réticule sombre. En particulier, la distance Z est choisie telle que $0,5.Zp \leq Z \leq 20.Zp$, par exemple $100\ \mu m \leq Z \leq 2\ mm$.

Le réticule sombre 30 est maintenu à la distance Z de la rétine 20 par un élément structurel. Cet élément structurel peut se présenter sous forme d'entretoises, de parois latérales, ou d'un bloc transparent par exemple.

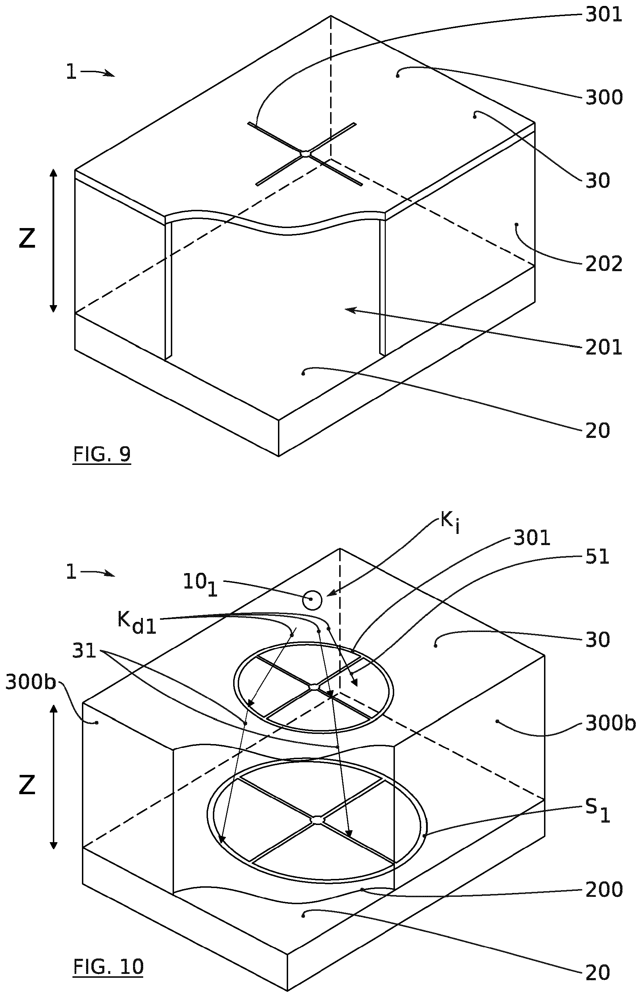

Selon un mode de réalisation illustré à la figure 9, le détecteur 1 s'apparente à un boîtier comprenant comme « socle » la rétine 20 et comme « couvercle » le réticule sombre 30. Ce boîtier présente des parois latérales 202 s'étendant entre la rétine 20 et le réticule sombre 30 et formant un contour fermé autour de l'espace interne 201 situé entre la rétine 20 et le réticule sombre 30. Les parois latérales présentent une hauteur Z et sont de préférence opaques. Elles peuvent être assemblées sur la face sensible de la rétine, en marge de la zone active de la rétine comprenant les photodétecteurs, ou sur les flancs de la rétine, autour de la face sensible de la rétine. Les surfaces internes de ces parois 202, en regard de l'espace interne 201, sont de préférence absorbantes. Cela limite les réflexions parasites dans le boîtier, selon le principe connu de la chambre noire. Cela améliore la précision du détecteur 1.

Dans cet exemple, le détecteur 1 comprend une ouverture 301 présentant le motif illustré en figure 6D. Un détecteur 1 comprenant des parois latérales tel qu'illustré ici peut également comprendre d'autres ouvertures et/ou d'autres motifs d'ouverture.

Selon un mode de réalisation du détecteur 1 illustré à la figure 10, l'élément structurel permettant de soutenir le réticule sombre 30 à la distance Z de la rétine 20 est un bloc transparent 200. Ainsi, dans cet exemple, les rayons lumineux se propagent au sein de la matière de ce bloc. Le bloc 200 est de préférence monolithique. Il ne comporte pas de vide ou d'air en son sein.

Le réticule sombre 30 est formé sur la face supérieure du bloc transparent. Selon une possibilité, une couche antireflet est déposée entre le réticule sombre 30 et la face supérieure du bloc transparent 200. Cela permet de limiter voire de supprimer les réflexions des rayons lumineux diffusés $k_{d1}$ au niveau de l'ouverture 301, en particulier au niveau de la face supérieure du bloc transparent 200 exposée au travers de l'ouverture 301. Cette couche antireflet permet notamment d'améliorer la sensibilité du détecteur.

Alternativement, si le bloc transparent 200 s'étend dans l'ouverture 301, ou si l'ouverture 301 est remplie par un autre matériau transparent, de façon à former une surface transparente affleurant la surface opaque 300 du réticule sombre 30, la couche antireflet peut être déposée au-dessus du réticule sombre, sur les surfaces transparente et opaque.

Les surfaces latérales 300b du bloc transparent 200 sont de préférence opaques. Elles sont par exemple couvertes par un revêtement opaque, et de préférence par un revêtement opaque et absorbant. La rétine 20 est ainsi accolée à un bloc formant une chambre noire ouverte uniquement au niveau de l'ouverture optique 301. Sur la figure 10, une particule $10_1$ recevant des rayons incidents $k_i$ et diffusant des rayons diffusés $k_{d1}$ est illustrée. Une partie 51 des rayons lumineux diffusés $k_{d1}$ est stoppée par le réticule sombre, et une partie 31 des rayons lumineux diffusés $k_{d1}$ est transmise par le réticule sombre, au travers de l'ouverture 301. Cette partie 31 se propage dans le bloc transparent 200 jusqu'à la rétine 20, pour former le diagramme de diffusion $S_1$.

Le bloc transparent 200 peut être en un matériau transparent tel qu'un verre, un polymère optique, un silicone, un plastique, un composé sol-gel. Dans ce cas, le bloc transparent présente un indice de réfraction supérieur à celui du volume utile de détection (typiquement de l'air). Le diagramme de diffusion $S_1$ projeté au travers d'un tel bloc transparent est légèrement déformé par effet de réfraction. Cette déformation n'est en pratique pas gênante. Elle peut être caractéristique de l'utilisation d'un tel détecteur. Elle peut en outre être corrigée en adaptant la forme de l'ouverture (exemple de motif à courbure négative illustré à la figure 6G).

Le motif d'ouverture 301 illustré ici est un exemple de combinaison des motifs de croix (figure 6D) et d'anneau (figure 6I).

Lorsque plusieurs particules sont éclairées simultanément dans le volume utile de détection, la rétine reçoit plusieurs diagrammes de diffusion projetés à travers le réticule sombre.

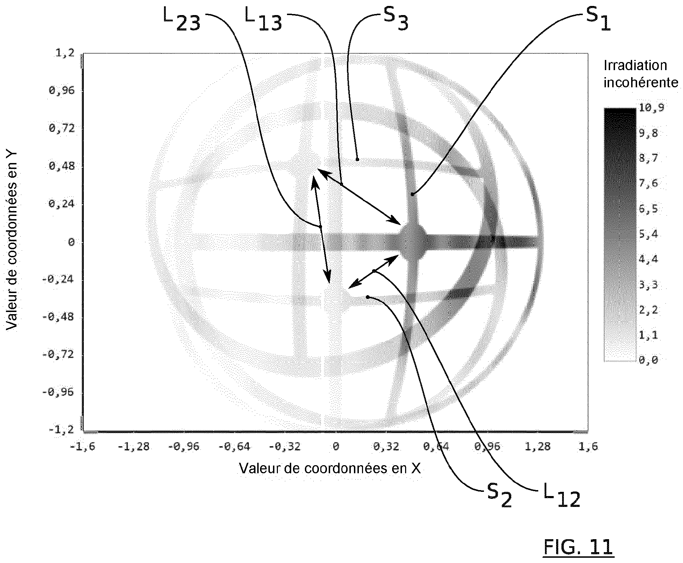

La figure 11 présente un résultat de calcul selon la théorie de Mie qui a été projeté par un lancer de rayons selon une méthode de Monte-Carlo. Ce résultat montre trois diagrammes de diffusion $S_1$, $S_2$, $S_3$ obtenus pour trois particules de taille différente (sphères de polystyrène de 1, 2 et 4 $\mu$m) détectées par le détecteur 1 illustré à la figure 10. Dans cet exemple si le motif 301 est une ouverture délimitée par une zone de blocage optique, le réticule est alors un réticule sombre. Dans ce cas, chaque diagramme de diffusion $S_1$, $S_2$, $S_3$ forme une tache de lumière sur la rétine 20.

Comme mentionné précédemment, ces diagrammes de diffusion $S_1$, $S_2$, $S_3$ sont légèrement déformés par effet de réfraction. Ces diagrammes de diffusion $S_1$, $S_2$, $S_3$ sont néanmoins bien distincts sur la rétine. Il est donc parfaitement possible de compter les particules. Il est par exemple possible de distinguer sur chaque diagramme $S_1$, $S_2$, $S_3$ le motif formé par un sténopé situé à l'intersection de deux fentes. L12 correspond à la distance entre ce motif formé par le diagramme $S_1$ et ce motif formé par le diagramme $S_2$. L13 correspond à la distance entre ce motif formé par le diagramme $S_1$ et ce motif formé par le diagramme $S_3$. L23 correspond à la distance entre ce motif formé par le diagramme $S_2$ et ce

motif formé par le diagramme $S_3$. Il est également possible de déterminer les paramètres géométriques (diamètre) et optiques (indice de réfraction) de chacune des particules, après analyse des diagrammes de diffusion $S_1$, $S_2$, $S_3$. Le détecteur peut notamment être couplé à un système doté de telles capacités d'analyse, par exemple un microprocesseur et une routine de calcul ad *hoc.*

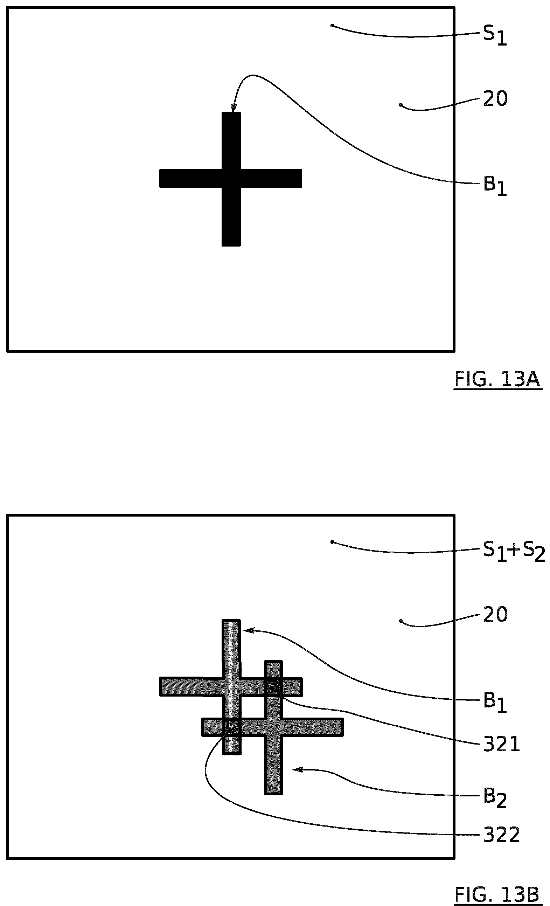

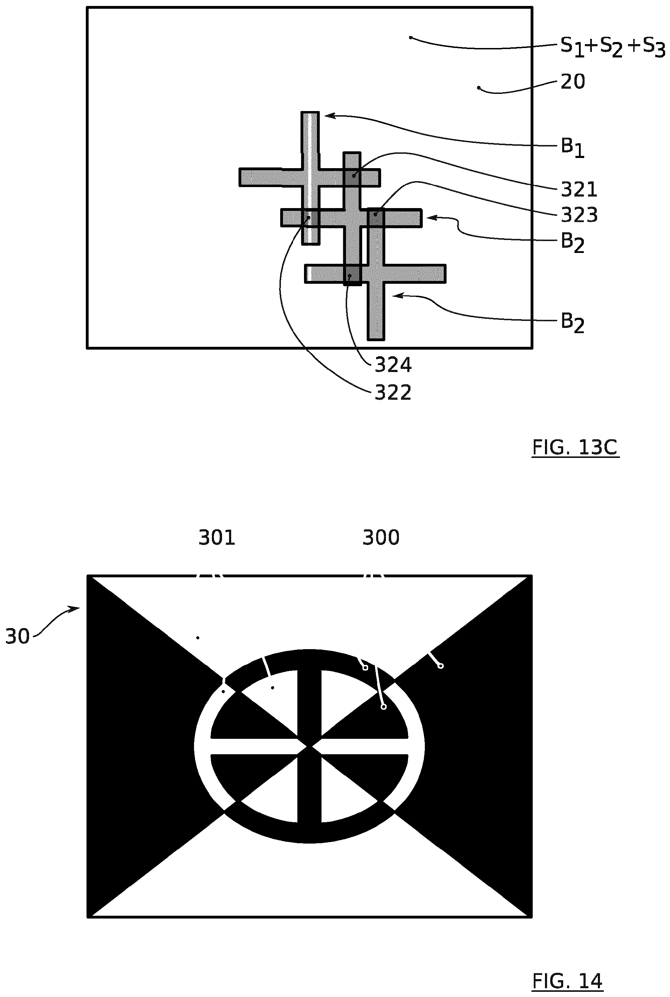

Selon un mode de réalisation illustré aux figures 12, 13A, 13B et 13C, l'au moins une zone de blocage optique présente une surface inférieure à celle de l'au moins une zone de passage optique.

Ainsi, un réticule 30 clair comprenant une surface opaque 300 en forme de croix par exemple, et une surface transparente 301 autour de la surface opaque 300 peut être préféré aux exemples décrits ci-dessus. D'autres motifs de surface opaque 300 peuvent naturellement être utilisés. Par exemple et de façon non limitative, les motifs d'ouvertures illustrés et décrits précédemment peuvent former la ou les surfaces opaques 300 du réticule 30 clair selon ce mode de réalisation. La ou les surfaces opaques 300 et la ou les ouvertures 301 du réticule 30 clair peuvent ainsi être inversées par rapport aux exemples précédents, de façon à obtenir sur la rétine une projection en négatif des diagrammes de diffusion.

La figure 13A illustre la projection sur la rétine 20 d'un diagramme de diffusion S1 issu d'une seule particule diffusante, au travers du réticule 30 clair illustré à la figure 12. Ce diagramme de diffusion est délimité par une ombre correspondant à la croix opaque présente sur le réticule clair 30.

Dans ce cas, le diagramme de diffusion S1 occupe une majeure partie de la surface de la rétine 20. Cela permet de recueillir une quantité d'informations contenues dans le diagramme de diffusion plus importante. Des informations relatives à la taille de la particule diffusante ainsi qu'à sa nature peuvent notamment être déterminées à partir de ce diagramme de diffusion S1. L'ombre projetée B1 formée par la surface opaque 300 permet de déterminer la position de la particule diffusante. Elle permet de constater qu'une seule particule a été détectée.

La figure 13B illustre la projection sur la rétine 20 de deux diagrammes de diffusion S1, S2 issus de deux particules diffusantes, au travers du réticule 30 clair illustré à la figure 12.

Les rayons diffusés par ces particules diffusantes atteignent la rétine 20 sur une majeure partie de sa surface et forment la superposition des diagrammes de diffusion S1 + S2. La surface opaque 300 bloque ces rayons diffusés et forme deux ombres B1, B2 sur la rétine 20. L'ombre projetée B1 correspond à la première particule diffusante et l'ombre projetée B2 correspond à la deuxième particule diffusante.

La superposition des diagrammes de diffusion S1 + S2 est difficilement exploitable. Celle-ci forme sur la rétine un fond lumineux mélangeant les informations portées par les diagrammes S1, S2. En revanche, les ombres projetées B1, B2 peuvent être exploitées de façon à déterminer au moins la position, de préférence également la taille, et de préférence également la nature des particules diffusantes.

L'ombre B1 ne reçoit aucun rayon diffusé par la première particule. En revanche, l'ombre B1 reçoit au moins en partie des rayons diffusés par la deuxième particule. L'ombre B1 contient donc des informations de diffusion relatives à la deuxième particule.

De façon similaire, l'ombre B2 ne reçoit aucun rayon diffusé par la deuxième particule. En revanche, l'ombre B2 reçoit au moins en partie des rayons diffusés par la première particule. L'ombre B2 contient donc des informations de diffusion relatives à la première particule.

Les zones de superposition 321, 322 des ombres B1, B2 ne reçoivent ni les rayons diffusés issus de la première particule, ni les rayons diffusés issus de la deuxième particule. Le contraste vis-à-vis du fond lumineux est maximal au niveau de ces zones de superposition 321, 322.

Des informations relatives aux positions des particules peuvent être déterminées à partir des positions des ombres projetées B1, B2 sur la rétine 20, et/ou des positions des zones de superposition 321, 322 sur la rétine 20.

Des informations relatives aux tailles des particules peuvent être déterminées à partir des surfaces des ombres projetées B1, B2 sur la rétine 20, et/ou des surfaces des zones de superposition 321, 322 et/ou des rapports de forme de ces surfaces sur la rétine 20.

Des informations relatives à la nature des particules (par exemple leur indice de réfraction) peuvent être déterminées à partir du taux de contraste des ombres projetées B1, B2 sur la rétine 20.

La taille et l'indice de réfraction d'une particule sont typiquement des grandeurs couplées. On peut les évaluer à la fois en analysant les surfaces des ombres sur lesquelles apparaissent les alternances de Mie (non mélangées) ainsi qu'en analysant les rapports de contrastes.

Des informations relatives à la taille et à la nature de la première particule peuvent être déterminées à partir de la partie de diagramme de diffusion de cette première particule contenue dans B2. Des informations relatives à la taille et à la nature de la deuxième particule peuvent être déterminées à partir de la partie de diagramme de diffusion de cette deuxième particule contenue dans B1.

Ainsi ce mode de réalisation permet de déterminer de nombreuses informations relatives aux particules.

La figure 13C illustre la projection sur la rétine 20 de trois diagrammes de diffusion S1, S2, S3 issus de trois particules diffusantes, au travers du réticule 30 clair illustré à la figure 12.

La superposition des diagrammes de diffusion S1 + S2 + S3 est difficilement exploitable. Celle-ci forme sur la rétine un fond lumineux mélangeant les informations portées par les diagrammes S1, S2, S3. En revanche, les ombres projetées B1, B2, B3 peuvent être exploitées de façon à déterminer au moins la position, de préférence également la taille, et de préférence également la nature des particules diffusantes, selon le principe exposé ci-dessus dans le cas de deux particules diffusantes.

Dans ce cas cependant, seules les zones de superposition 321, 322, 323 entre les ombres B1, B2, B3 sont susceptibles de contenir une partie de diagramme de diffusion relatif à une seule particule diffusante. En particulier, les zones de superposition 321, 322 des ombres B1, B2 ne reçoivent ni les rayons diffusés issus de la première particule, ni les rayons diffusés issus de la deuxième particule. En revanche, les zones de superposition 321, 322 reçoivent au moins en partie des rayons diffusés par la troisième particule. Ces zones de superposition 321, 322 contiennent donc des informations de diffusion relatives à la troisième particule. Les zones de superposition 323, 324 des ombres B2, B3 ne reçoivent ni les rayons diffusés issus de la deuxième particule, ni les rayons diffusés issus de la troisième particule. De même, les zones de superposition 323, 324 reçoivent au moins en partie des rayons diffusés par la première particule. Ces zones de superposition 323, 324 contiennent donc des informations de diffusion relatives à la première particule.

Des informations relatives aux positions des particules peuvent être déterminées à partir des positions des ombres projetées B1, B2, B3 sur la rétine 20, et/ou des positions des zones de superposition 321, 322, 323, 324 sur la rétine 20.

Des informations relatives aux tailles des particules peuvent être déterminées à partir des surfaces des ombres projetées B1, B2, B3 sur la rétine 20, et/ou des surfaces des zones de superposition 321, 322, 323, 324 et/ou des rapports de forme de ces surfaces sur la rétine 20.

Des informations relatives à la nature des particules peuvent être déterminées à partir du taux de contraste des ombres projetées B1, B2, B3 sur la rétine 20.

La taille et l'indice de réfraction d'une particule sont typiquement des grandeurs couplées. On peut les évaluer à la fois en analysant les surfaces des ombres sur lesquelles apparaissent les alternances de Mie (non mélangées) ainsi qu'en analysant les rapports de contrastes.

Des informations relatives à la taille et à la nature de la première particule peuvent être déterminées à partir de la partie de diagramme de diffusion de cette première particule contenue dans les zones de superposition 323, 324. Des informations relatives à la taille et à la nature de la troisième particule peuvent être déterminées à partir de la partie de diagramme de diffusion de cette troisième particule contenue dans les zones de superposition 321, 322.

Selon un mode de réalisation illustré à la figure 14, le réticule 30 comprend au moins une zone de blocage optique 300 (surfaces opaques) et au moins une zone de blocage passage optique 301 (surfaces transparentes). Dans cet exemple le réticule portent plusieurs zones 300 et plusieurs zones 301. Les zones 300 et zones 301 sont dans une même proportion. La surface totale des zones de passage optique 301 est égale à la surface totale des zones de blocage optique 300, à X% près, avec X inférieur à 15%, de préférence X inférieur à 10%, et de préférence X inférieur à 2%.

Cela permet de combiner les avantages d'analyse directe à partir des parties de diagrammes de diffusion transmises au travers du réticule sombre, et les avantages d'analyse indirecte à partir des ombres projetées au travers du réticule clair.

Différents motifs de surfaces transparentes et de surfaces opaques, présentant des symétries ou non, peuvent être intégrés au réticule 30. La figure 14 illustre un exemple combinant des motifs de fente rectiligne et curviligne, et des motifs en plein ou en creux de forme sensiblement triangulaire. Ces motifs alternent de préférence des portions opaques et des portions transparentes.

Canal traversant

Selon un mode de réalisation, le détecteur 1 comprend un canal fluidique. Ce canal fluidique est configuré pour guider le flux de particules à analyser jusqu'au volume utile de détection. Cela permet d'optimiser l'efficacité du détecteur.

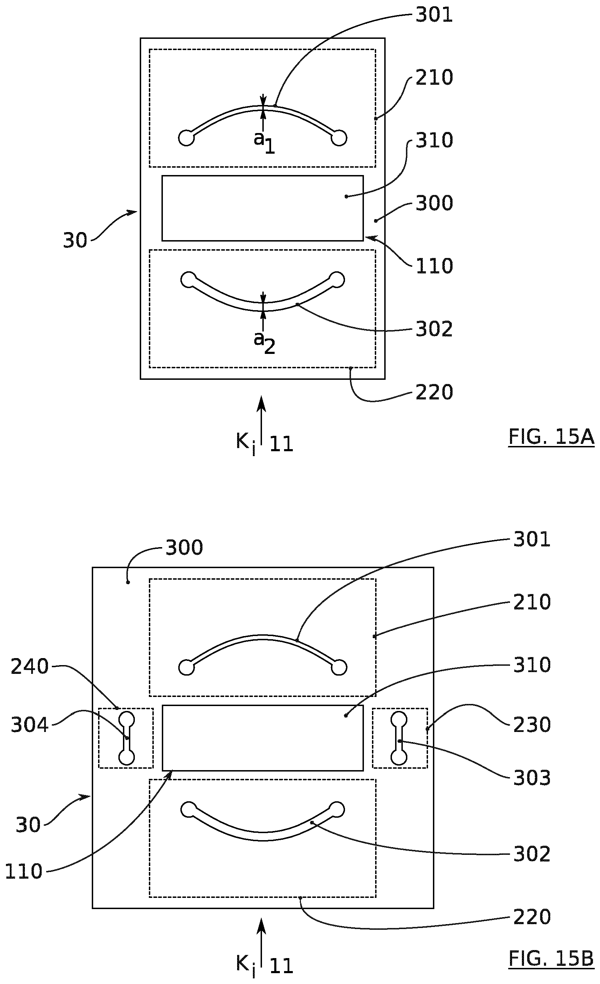

Le canal fluidique traverse de préférence le détecteur, de préférence de part en part et selon l'axe optique O. Le détecteur présente ainsi une compacité améliorée. Les figures 15A à 17 illustrent des exemples de réalisation de détecteur comprenant un canal fluidique.

Comme illustré en figure 15A et 15B par exemple, ce canal fluidique 110 peut déboucher au niveau d'un orifice 310 au travers du réticule sombre 30. L'orifice 310 est par exemple centré sur le réticule 30. Alternativement, l'orifice 310 peut être situé sur un côté du réticule. Il peut présenter une section carré, rectangulaire, ronde ou autre.

Dans le cas d'un canal fluidique 110 traversant le réticule 30, le réticule 30 comprend de préférence au moins deux ouvertures 301, 302 situées de part et d'autre de l'orifice 310 (figure 15A). Les deux ouvertures 301, 302 sont de préférence disposées le long de l'axe de propagation des rayons incidents $k_i$.

Les deux ouvertures 301, 302 peuvent présenter des dimensions $a_1$, $a_2$ différentes. Elles peuvent correspondre à des zones 210, 220 de la rétine différentes, situées sensiblement à l'aplomb des ouvertures 301, 302 selon l'axe optique. Cela permet d'optimiser la détection des rayons diffusés en fonction de la direction des rayons incidents $k_i$. Sur la figure 15A, les rayons incidents $k_i$ se propagent depuis la source primaire vers la première ouverture 301, dans le plan de la feuille. Lorsqu'une particule diffusante se trouve au-dessus de l'orifice 310, une partie des rayons diffusés est diffusée dans le sens de propagation des rayons incidents $k_i$, tandis qu'une partie des rayons diffusés est rétrodiffusée, dans le sens opposé. L'intensité de la partie « rétrodiffusée » est plus faible que celle de la partie diffusée « frontalement » (dans le sens de propagation). La première ouverture 301 peut donc présenter une largeur $a_1$ plus petite que la largeur $a_2$ de la deuxième ouverture 302. Cela permet d'améliorer la résolution de la première partie du diagramme de diffusion projeté au travers de la première ouverture 301, et d'améliorer la détection de la deuxième partie du diagramme de diffusion projeté au travers de la deuxième ouverture 302.

La première zone 210 de la rétine peut comprendre des photodétecteurs adaptés aux conditions de diffusion frontale. La deuxième zone 220 de la rétine peut comprendre des photodétecteurs adaptés aux conditions de rétrodiffusion.

La diffusion frontale est en effet généralement plus lumineuse que la rétrodiffusion, généralement peu lumineuse. Par conséquent, la première zone 210 peut comprendre des photodétecteurs relativement plus petits et plus nombreux, tandis que la deuxième zone 220 peut comprendre des photodétecteurs relativement plus gros et plus sensibles. Cela permet d'améliorer la résolution de la première partie du diagramme de diffusion formée sur la première zone 210, et d'améliorer la détection de la deuxième partie du diagramme de diffusion formée sur la deuxième zone 220.

Les ouvertures 301, 302 et zones 210, 220 de la rétine peuvent ainsi être adaptées en fonction des conditions d'éclairage et de diffusion.

La figure 15B présente un mode de réalisation plus général où le réticule 30 comprend quatre ouvertures 301, 302, 303, 304 et où la rétine comprend quatre zones 210, 220, 230, 240 correspondantes. Les ouvertures 301, 302, 303, 304 et les zones 210, 220, 230, 240 sont réparties autours du canal fluidique 110 traversant, dans des plans normaux à l'axe optique le long duquel s'étend le canal 110, c'est-à-dire dans des plans parallèles au plan de la feuille. Les deux ouvertures 301, 302 sont de préférence disposées le long de l'axe de propagation des rayons incidents $k_i$, comme dans le mode de réalisation précédent. Les troisième et quatrième ouvertures 303, 304 sont de préférence disposées de part et d'autre de l'axe de propagation des rayons incidents $k_i$.

La première ouverture 301 est ainsi dédiée à la diffusion frontale, la deuxième ouverture 302 est ainsi dédiée à la rétrodiffusion, et les troisième et quatrième ouvertures 303, 304 sont ainsi dédiées à une diffusion latérale.

De façon générale, le nombre d'ouvertures du réticule et/ou de zones de la rétine du détecteur selon l'invention peut varier. Ce nombre peut être par exemple impair. Le ou les motifs d'ouverture ne sont pas forcément symétriques de part et d'autre de l'orifice. Ils sont de préférence optimisés en fonction de la zone de diffusion (frontale, latérale, rétrodiffusion).

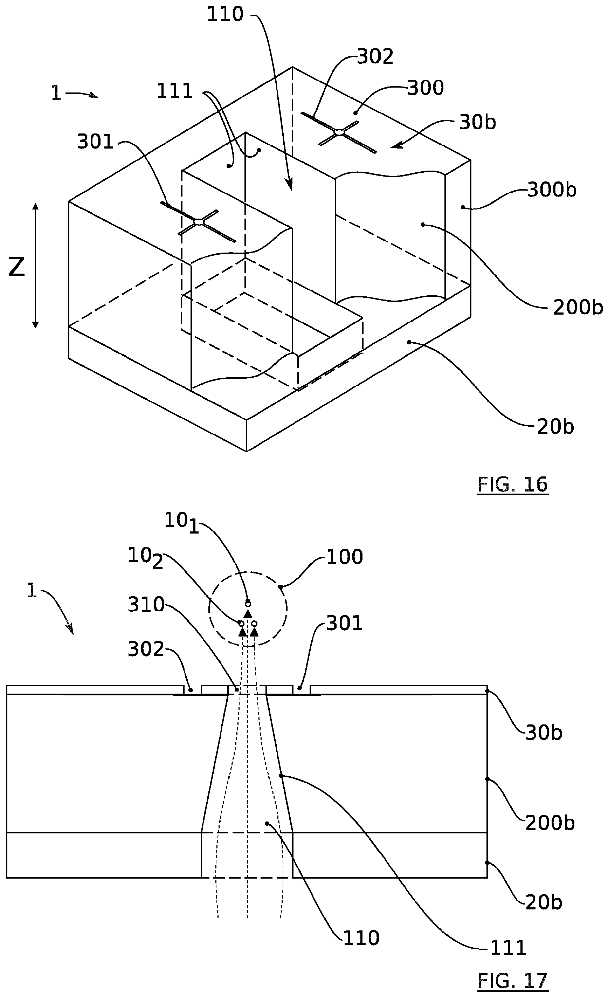

Un détecteur 1 comprenant un canal fluidique 110 traversant est illustré à la figure 16.

Le canal fluidique 110 traverse la rétine 20, le bloc transparent 200 et le réticule sombre 30 sur toute la hauteur du détecteur 1. Chaque élément (rétine, bloc, réticule) est par exemple préalablement percé puis assemblé de sorte à former le canal fluidique. Les parois 111 du canal fluidique 110 sont ainsi formées directement au sein du bloc transparent 200 et de la rétine 20.

La section de ce canal fluidique 110 présente des dimensions comprises entre 100 $\mu$m et 2 mm. Cette section peut présenter une forme rectangulaire, carrée, circulaire, elliptique, oblong etc.

Sur cet exemple non limitatif, les motifs d'ouvertures 301, 302 du réticule sombre 30 sont formés d'au moins un sténopé et/ou d'au moins une fente, arrangés par exemple en forme de croix tel qu'illustré à la figure 6D. Les ouvertures 301, 302 sont avantageusement réparties de part et d'autre ou autour du canal fluidique 110 traversant.

Selon ce mode de réalisation, l'élément structurel maintenant le réticule sombre à la distance Z de la rétine est un bloc transparent et ce bloc transparent est percé de façon à former le canal. Alternativement, l'élément structurel peut se présenter sous forme d'entretoises ou de parois latérales. Dans ce cas (non illustré), des murs additionnels internes permettent de former le canal.

De façon préférée, les parois 111 du canal 110 sont opaques ou recouvertes d'un revêtement opaque. Cela permet d'éviter que des rayons lumineux parasites ne parviennent à la rétine.

Selon un mode de réalisation illustré à la figure 17, la section du canal 110 n'est pas constante le long de la hauteur du détecteur 1, c'est-à-dire selon une direction sensiblement perpendiculaire au plan principal dans lequel s'étend la rétine 20. En particulier, les parois 111 peuvent être inclinées de façon à réduire la section du canal 110 au niveau de l'orifice 310. Ainsi, l'entrée du canal 110 présente une section supérieure à celle de l'orifice 310 formant la sortie du canal 110. Le canal forme dès lors une buse d'injection de particules conique. Cela permet de concentrer et d'accélérer le flux de particules $10_1$, $10_2$ dans le volume utile de détection 100. La sensibilité du détecteur 1 en est améliorée.

La buse d'injection de particules peut alternativement présenter une forme pyramidale à base carrée, ou un rétrécissement de forme quelconque.

Procédé de fabrication

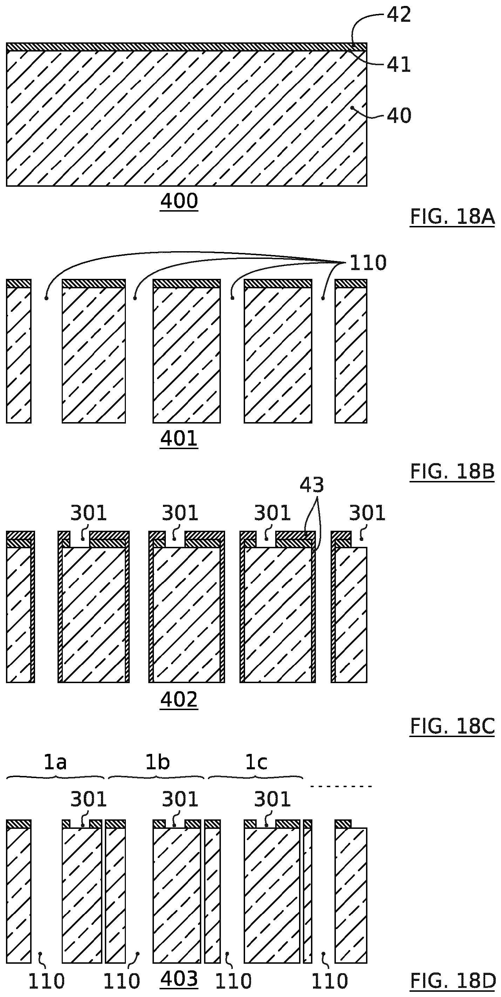

Les figures 18A à 18G illustrent des étapes d'un procédé de fabrication d'un détecteur comprenant un réticule sombre et un canal traversant. Sur cet exemple de réalisation, l'élément structurel du détecteur est un bloc transparent. Naturellement, des étapes additionnelles peuvent être intercalées entre les étapes mentionnées ci-dessous.

Une première étape consiste à fournir 400 un substrat 40 transparent. Ce substrat 40 peut être en verre, par exemple en verre Borofloat 33. Il peut se présenter sous forme d'une plaque de 200 mm de diamètre et d'épaisseur Z = 725 $\mu$m.

Une couche opaque 42 est déposée sur toute la plaque. Cette couche opaque 42 peut être en métal, par exemple en or (Au), et présenter une épaisseur de l'ordre de 100 nm. Une couche d'accroche 41, par exemple en titane (Ti) de 10 nm d'épaisseur, peut être déposée préalablement au dépôt de la couche opaque 42 (figure 18A). La couche opaque 42 peut être alternativement en cuivre (Cu), en alliage d'aluminium-silicium (AlSi), ou en carbone (C).

Une deuxième étape consiste à graver 401 une pluralité de canaux 110 sur toute l'épaisseur du substrat 40, par exemple par gravure profonde par laser (figure 18B).

Une troisième étape consiste à former 402 des ouvertures 301 par photolithographie (figure 18C). De façon connue, une couche de résine photosensible 43 est déposée puis insolée au travers d'un masque comprenant des motifs d'ouvertures, de façon à transférer ces motifs d'ouvertures. La couche de résine insolée est ensuite développée afin d'exposer en partie la couche opaque 42 au niveau des motifs d'ouvertures transférés. Une gravure, par exemple par voie humide, de la couche opaque 42 au niveau des parties exposées est ensuite effectuée de manière à former les ouvertures 301 présentant lesdits motifs d'ouvertures. La couche de résine est ensuite retirée (étape dénommée « stripping » selon la terminologie anglo-saxonne). Le ou les réticules sombres sont ainsi formés.

Une quatrième étape consiste à séparer 403 les différents blocs transparents 1a, 1b, 1c comprenant chacun un canal 110 et au moins une ouverture 301, de façon à former une pluralité de détecteurs (figure 18D). Cette étape peut se faire par perçage laser, par exemple en utilisant un laser femtoseconde.

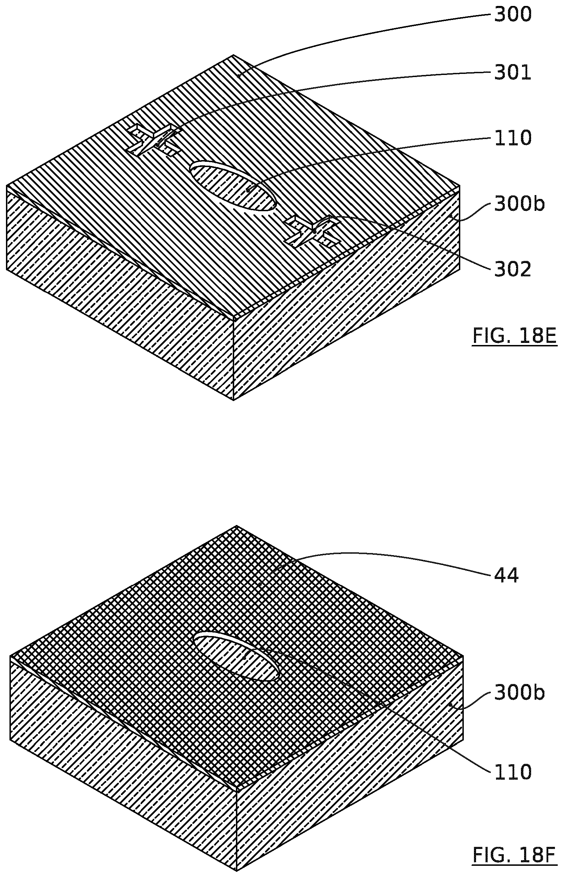

Une étape optionnelle de nettoyage peut être réalisée, de façon à éliminer des résidus de gravure ou de perçage sur les surfaces libres du bloc transparent (au niveau des ouvertures 301, du canal 110, des surfaces latérales 300b, tel qu'illustré à la figure 18E).

De façon préférée mais optionnelle, une étape d'opacification des parois du canal 110 et des surfaces latérales 300b est effectuée. Un masquage préalable de la surface 300 et des ouvertures 301, 302 du réticule sombre est réalisé. Une couche de masquage ou de protection 44 est par exemple déposée. Les parois du canal 110 et les surfaces latérales 300b sont ensuite rendues opaques, par exemple par projection de peinture noire (figure 18F).

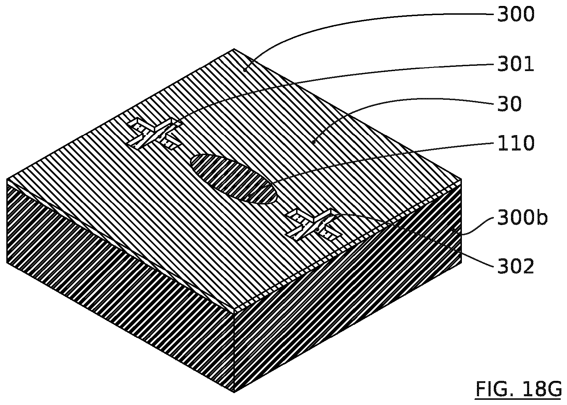

La couche de masquage est ensuite retirée. Le bloc transparent ainsi obtenu présente des surfaces latérales 300b opaques. Il est surmonté par un réticule sombre 30 comprenant une surface opaque 300 réfléchissante et des ouvertures 301, 302. Il est en outre traversé par un canal 110 délimité par des parois opaques (figure 18G).

Selon un mode de réalisation alternatif, la résine photosensible est noire et absorbante. Les étapes de stripping et d'opacification sont ainsi avantageusement supprimées. Le réticule sombre 30 ainsi obtenu comprend une surface opaque 300 absorbante.

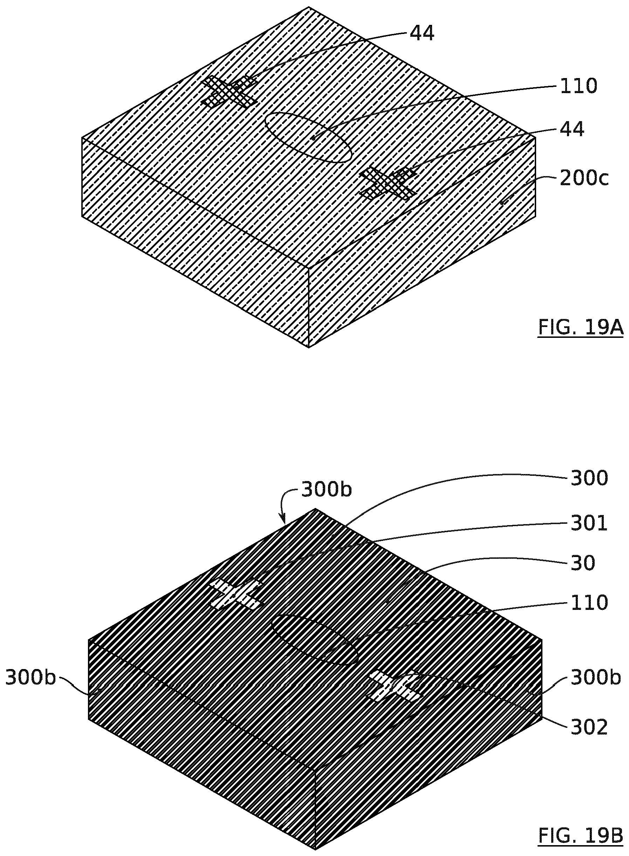

Selon un autre mode de réalisation illustré aux figures 19A, 19B, le bloc transparent 200c est formé à partir d'un polymère transparent moulé. Le canal 110 est dès lors directement obtenu à l'issue du moulage.

Selon cet exemple, des caches 44 présentant la forme des motifs d'ouvertures sont ensuite déposés de part et d'autre du canal 110 (figure 19A). Ces caches 44 peuvent être réalisés à partir d'un film protecteur coupé et collé en surface du bloc transparent 200c.

Une étape d'opacification par projection de peinture est ensuite effectuée. Toutes les surfaces peuvent ainsi être couvertes de peinture noire absorbante, à l'exception des surfaces masquées par les caches 44. En retirant les caches 44, le bloc transparent ainsi obtenu présente des surfaces latérales 300b opaques. Il est surmonté par un réticule sombre 30 comprenant une surface opaque 300 absorbante et des ouvertures optiques 301, 302. Il est en outre traversé par un canal 110 délimité par des parois opaques (figure 19B).

Selon une autre possibilité, la surface opaque 300 est formée en collant un film plastique opaque préalablement découpé au niveau de l'orifice du canal et des ouvertures optiques.

Le bloc transparent ainsi obtenu est ensuite assemblé à une rétine (imageur CMOS) de façon à former le détecteur. Une colle optique est par exemple déposée sur la face de l'imageur comprenant les photodétecteurs. Le bloc transparent est ensuite placé en regard de cette face, et aligné vis-à-vis de l'imageur de préférence à l'aide de motifs d'alignements prévus. Cette étape peut se faire à l'aide d'une machine dite « pick and place » du type fourni par la société Datacon par exemple.

Le bloc est ensuite collé et scellé à l'imageur par réticulation thermique de la colle. Le coût de fabrication d'un tel détecteur est avantageusement diminué.

Faisceau d'éclairage

Le détecteur selon l'invention peut être couplé avec différentes sources d'éclairage du volume utile de détection 100. Ces sources d'éclairage sont décrites ci-dessous. Elles peuvent former avec le détecteur un système de détection selon la présente invention. Elles peuvent également constituer un aspect séparable du détecteur et qui peut être exploité indépendamment du détecteur.

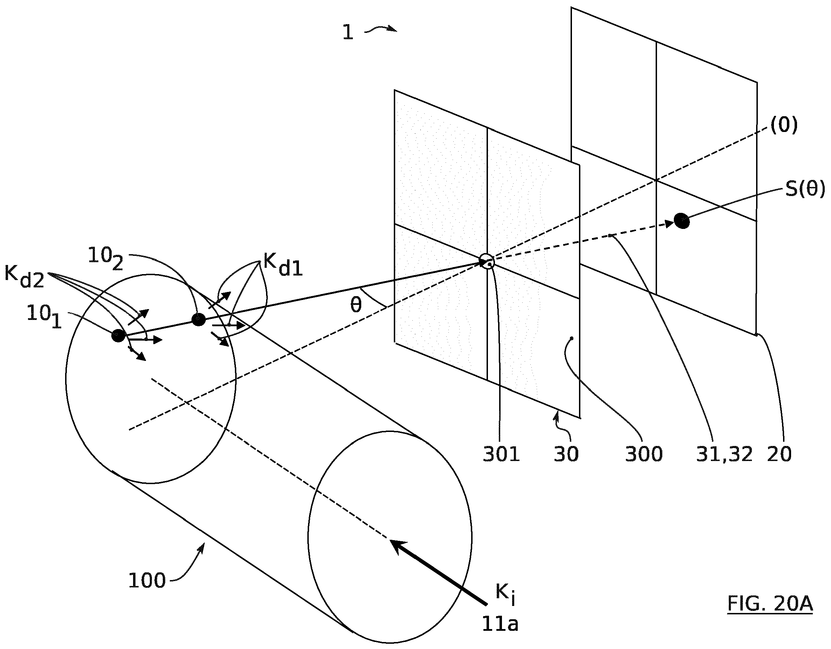

La figure 20A illustre un faisceau incident $k_i$ cylindrique, par exemple collimaté, émis par une source 11a. Le volume utile de détection 100 qui en résulte est ainsi cylindrique. En associant un tel volume utile de détection 100 à un détecteur 1 comprenant une ouverture 301 en forme de sténopé, le comptage des particules $10_1$, $10_2$ peut être biaisé. Ce biais peut notamment survenir lorsque les particules $10_1$, $10_2$ et le sténopé 301 sont sensiblement alignés selon une même direction, c'est-à-dire lorsque $\theta_{ij} < \delta\theta$, comme illustré à la figure 20A. Dans ce cas, les parties diffusées 31, 32 à travers le sténopé forment un seul faisceau diffusé, résultant en un seul diagramme ou une seule tache $S(\theta)$ sur la rétine 20. Les diagrammes de diffusion des deux particules $10_1$, $10_2$ sont en partie confondus. Il est alors très difficile de distinguer les deux particules $10_1$, $10_2$. Une solution peut consister à utiliser un motif d'ouverture plus complexe, par exemple tel qu'illustré aux figures 6C à 6J.

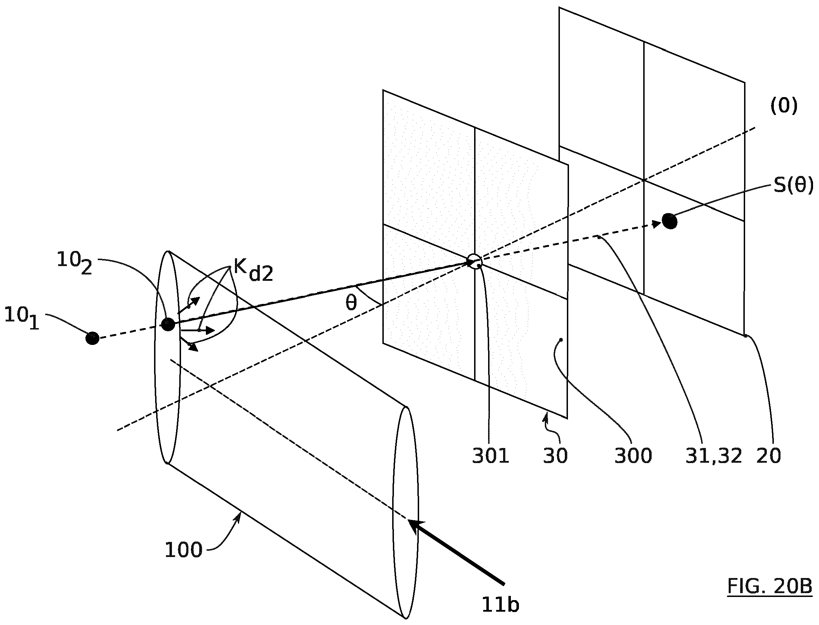

Une solution alternative illustrée à la figure 20B consiste à modifier le faisceau d'éclairage et, par conséquent, le volume utile de détection 100. Une source 11b émettant un faisceau elliptique ou aplati peut réduire voire éliminer le risque que deux particules $10_1$, $10_2$ alignées avec le sténopé diffusent simultanément. Cela réduit le risque de superposition des signatures des particules $10_1$, $10_2$ sur la rétine. La section de ce faisceau présente dès lors une grande dimension et une petite dimension, et la grande dimension est de préférence perpendiculaire à l'axe optique O. Le rapport entre la grande dimension et la petite dimension est par exemple de l'ordre de 5:1, de préférence ce rapport est de l'ordre de 10:1.

La direction de propagation du faisceau source n'est pas nécessairement parallèle au plan du réticule sombre 30. Elle est néanmoins choisie de façon à ne pas éblouir directement la rétine 20 du détecteur à travers le réticule sombre 30. Selon une possibilité, le faisceau source peut être focalisé, divergent ou convergent.

Selon un mode de réalisation, l'éclairage de la ou des particules au sein du volume utile de détection comprend plusieurs longueurs d'onde ou couleurs. Cela permet notamment d'affiner l'analyse d'une particule, et en particulier de réduire les incertitudes lors de l'estimation de sa taille. Une telle analyse par couleurs est par exemple décrite dans la publication « S. Wang, X. Xiao, T. Deng, A. Chen, M. Zhu, A Sauter mean diameter sensor for fire smoke detection, Sensors & Actuators: B. Chemical 281 (2019) 920-932 ».

Selon un exemple, le volume utile de détection est éclairé par deux faisceaux (ou plus) colinéaires de même sens, et de longueurs d'onde différentes. Alternativement, un seul faisceau dit « blanc » dont la largeur spectrale peut s'étendre sur la gamme du spectre visible, éclaire le volume utile de détection.

De telles sources d'éclairage dites polychromatiques colinéaires peuvent être associées à un détecteur comprenant une rétine sensible à la couleur. Les photodétecteurs de la rétine peuvent par exemple comprendre des filtres colorés rouges, verts, ou bleus. En particulier, des photodétecteurs « rouges » (i.e. comprenant un filtre rouge) peuvent être alternés avec des photodétecteurs « bleus » et des photodétecteurs « verts ». L'ensemble des photodétecteurs « rouges », « verts » et « bleus » forme de préférence une mosaïque de Bayer. Il est ainsi possible d'obtenir trois diagrammes de diffusion « colorés », relatifs aux trois couleurs des photodétecteurs. Un tel détecteur permet d'effectuer une analyse par couleurs des particules à détecter.

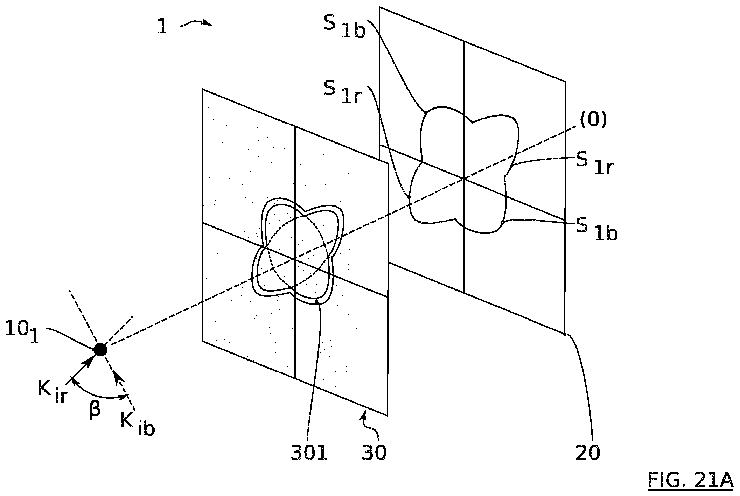

La figure 21A présente une autre configuration permettant d'effectuer une analyse par couleurs des particules à détecter.

Selon ce mode de réalisation, la ou les particules à détecter sont éclairées par au moins deux faisceaux $k_{ir}$, $k_{ib}$ de couleurs différentes présentant des directions de propagation différentes. Ces faisceaux peuvent présenter un angle $\beta$ non nul entre leurs directions de propagation. Ces faisceaux peuvent éventuellement être colinéaires et contra-propagatifs ($\beta = 180°$). Les faisceaux peuvent être au nombre de trois ou plus. Ils peuvent présenter des couleurs dans le domaine d'absorption du Silicium, en particulier dans le visible, par exemple vert, bleu, rouge, et/ou dans le proche UV et/ou dans le proche infrarouge (NIR).

Le détecteur 1 associé à cette configuration d'éclairage comprend avantageusement une ouverture 301 permettant de séparer les rayons diffusés en fonction des directions de propagation des faisceaux incidents. La géométrie du motif de l'ouverture 301 est choisie en fonction de ces directions de propagation.

Sur l'exemple illustré à la figure 21A, la particule $10_1$ est éclairée par deux faisceaux $k_{ir}$, $k_{ib}$ présentant des directions de propagation parallèles au plan du réticule sombre 30 et formant entre elles un angle $\beta$ environ égal à 90°. Le motif de l'ouverture 301 peut dès lors être formé par la réunion d'une partie d'une première ellipse alignée (selon son grand axe) sur la direction de propagation du faisceau $k_{ir}$, et d'une partie d'une deuxième ellipse alignée (selon son grand axe) sur la direction de propagation du faisceau $k_{ib}$. Les grands axes des première et deuxième ellipses forment entre eux l'angle $\beta$. La première ellipse est optimisée pour la couleur du faisceau $k_{ir}$, par exemple rouge, et la deuxième ellipse est optimisée pour la couleur du faisceau $k_{ib}$, par exemple bleue. Cela permet d'optimiser la transmission des lobes de Mie colorés pour la particule $10_1$. Le diagramme de diffusion ($S_{1r}$, $S_{1b}$) formé sur la rétine 20 est donc une superposition des deux diagrammes de diffusion colorés $S_{1r}$, $S_{1b}$.

Les deux diagrammes de diffusion colorés $S_{1r}$, $S_{1b}$ sont décalés de l'angle $\beta$ dans le plan de la rétine. Ils présentent en outre une intensité lumineuse optimale, du fait de l'alignement des grands axes des ellipses avec les directions de propagation des faisceaux sources. Cela permet de distinguer les deux diagrammes de diffusion colorés $S_{1r}$, $S_{1b}$ de façon optimale. Un tel détecteur permet donc également d'effectuer une analyse par couleurs des particules à détecter.

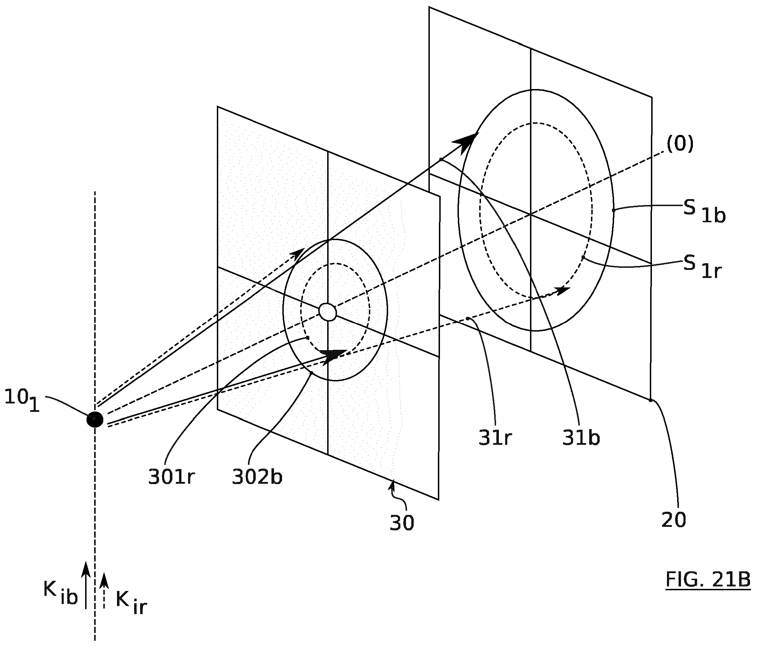

Un autre mode de réalisation d'un système comprenant un détecteur et des sources colorées est illustré à la figure 21B. Selon cet exemple, le réticule sombre 30 comprend au moins deux ouvertures 301r, 302b colorées, adaptées aux couleurs des faisceaux incidents $k_{ir}$, $k_{ib}$. Ces ouvertures 301r, 302b sont séparées l'une de l'autre et peuvent présenter différents motifs. Elles forment par exemple des anneaux ou des ellipses concentriques, comme illustré en figure 21B. En pratique, les ouvertures 301r, 302b peuvent être recouvertes par un filtre coloré. Par exemple, le faisceau $k_{ir}$ est rouge et l'ouverture 301r est recouverte d'un filtre rouge qui permet de transmettre, de préférence uniquement, les rayons diffusés 31r de couleur rouge. Le faisceau $k_{ib}$ est bleu et l'ouverture 302b est recouverte d'un filtre bleu qui permet de transmettre, de préférence uniquement, les rayons diffusés 31b de couleur bleue. Selon un autre exemple, le faisceau $k_{ir}$ est NIR et l'ouverture 301r est recouverte d'un filtre NIR qui permet de transmettre, de préférence uniquement, les rayons diffusés 31r de couleur NIR. Le faisceau $k_{ib}$ est rouge et l'ouverture 302b est recouverte d'un filtre rouge qui permet de transmettre, de préférence uniquement, les rayons diffusés 31b de couleur rouge. Les filtres rouge et NIR peuvent être formés par des couches peu coûteuses. Cela permet de diminuer le coût du détecteur. Selon un autre exemple plus général, le faisceau $k_{ib}$ présente une couleur associée à une première longueur d'onde et le faisceau $k_{ir}$ présente une couleur associée à une deuxième longueur d'onde avec la première longueur d'onde strictement inférieure à la deuxième longueur d'onde.

Chaque ouverture peut ainsi être spécifique à l'une des couleurs de la source d'éclairage. Dès lors, des diagrammes de diffusion $S_{1b}$, $S_{1r}$ colorés de la particule $10_1$ sont projetés sur la rétine 20 du détecteur 1. Ces diagrammes colorés $S_{1b}$, $S_{1r}$ sont séparés sur la rétine. Un tel détecteur permet donc d'effectuer une analyse par couleurs des particules à détecter, même si la rétine n'est pas sensible à la couleur. Ce détecteur peut en outre fonctionner avec différentes sources polychromatiques, par exemple des sources polychromatiques colinéaires, tel qu'illustré à la figure 21B. Il est également possible d'utiliser un faisceau blanc et de limiter l'analyse par couleurs à quelques couleurs seulement.

L'invention n'est pas limitée aux seuls modes de réalisation décrits ci-dessus. L'invention est limitée par la portée des revendications 1-15.

De façon générale, les exemples de détecteurs comprenant une ouverture donnant lieu à des taches T1, T2 peuvent être transposés, sauf incompatibilité, à des détecteurs comprenant une surface sombre donnant lieu à des ombres B1, B2, et réciproquement. Ainsi les caractéristiques, effets techniques et avantages mentionnés à propos des modes de réalisation avec réticule sombre sont valables pour les modes de réalisation avec réticule clair.

## Revendications

**1.** Détecteur optique (1) de particules ($10_i$, $10_j$) dit sans

lentille, destiné à détecter simultanément au moins une première particule ($10_1$) et au moins une deuxième particule ($10_2$) au sein d'un volume utile (100) de détection destiné à accueillir un fluide transportant des particules ($10_i$, $10_j$) et à être traversé par des rayons lumineux incidents ($k_i$) émis par au moins une source primaire (11a, 11b), lesdites première et deuxième particules ($10_1$, $10_2$) formant respectivement des première et deuxième sources secondaires (21, 22) émettant respectivement, lorsqu'elles sont situées dans le volume utile (100) de détection et qu'elles diffusent une partie des rayons lumineux incidents ($k_i$), des premiers rayons lumineux diffusés ($k_{d1}$) et des deuxièmes rayons lumineux diffusés ($k_{d2}$), ledit détecteur (1) comprenant une rétine (20) formée par une pluralité de photodétecteurs aptes à recevoir des rayons lumineux diffusés, ledit détecteur (1) comprenant en outre au moins un réticule (30) interposé entre le volume utile (100) de détection et la rétine (20), ledit réticule (30) comprenant :

- au moins une zone de passage optique (301, 302) autorisant un passage vers la rétine (20) d'une partie (31) des premiers rayons lumineux diffusés ($k_{d1}$) et d'une partie (32) des deuxièmes rayons lumineux diffusés ($k_{d2}$), lesdites parties des premiers et deuxièmes rayons lumineux diffusés étant respectivement dénommées première (31) et deuxième (32) parties diffusées,
- au moins une zone de blocage optique (300) interdisant un passage vers la rétine (20) d'une partie (51) des premiers rayons lumineux diffusés ($k_{d1}$) et d'une partie (52) des deuxièmes rayons lumineux diffusés ($k_{d2}$),

au moins une parmi lesdites zones de passage et de blocage optique (301, 300) :

- étant séparée de la rétine (20) par une distance minimale Z prise selon un axe optique (O) normal à la rétine,
- présentant en outre au moins une dimension a prise selon une direction transversale à l'axe optique (O),

le réticule (30) et la rétine (20) étant configurés, en particulier la distance minimale Z et la dimension a, de sorte que :

- la première partie diffusée (31) est reçue par un premier ensemble de photodétecteurs dont la répartition délimite sur la rétine une première figure prise parmi une tache (T1) et une ombre (B1),
- la deuxième partie diffusée (32) est reçue par un deuxième ensemble de photodétecteurs dont la répartition délimite sur la rétine une deuxième figure prise parmi une tache (T2) et une ombre (B2), ladite deuxième figure (T2, B2) étant au moins en partie distincte de la première figure (T1, B1) lorsque les première (31) et deuxième (32) parties passant à travers l'au moins une zone de passage optique (301, 302) définissent ensemble un angle $\theta_{ij}$ dont la valeur est au moins égale à une résolution angulaire $\delta\theta$ du détecteur (1),

ledit détecteur optique (1) étant **caractérisé en ce qu'**il ne comprend pas de lentille entre le réticule (30) et la rétine (20).

2. Détecteur optique (1) selon la revendication précédente dans lequel le réticule (30) et la rétine (20) sont configurés, en particulier la distance minimale Z et la dimension a, de sorte que la deuxième figure (T2, B2) soit décalée par rapport à la première figure (T1, B1) sur la rétine (20), la plus petite distance $L_s$ correspondant à ce décalage entre ces deux figures (T1, T2, B1, B2) étant supérieure ou égale à 2*Lpix lorsque les première (31) et deuxième (32) parties diffusées passant à travers l'au moins une zone de passage optique (301, 302) définissent ensemble un angle $\theta_{ij}$ dont la valeur est au moins égale à une résolution angulaire $\delta\theta$ du détecteur, Lpix étant le pas entre deux photodétecteurs adjacents de la rétine.

3. Détecteur optique (1) selon la revendication précédente dans lequel ladite dimension a est configurée de sorte que

$$a = (Z.\,tan(\delta\theta) - L_s)\frac{Z_p}{Z + Z_p}$$

où Zp est la distance minimale séparant le volume utile de détection d'au moins une parmi lesdites zones de passage et de blocage optique (301, 300).

4. Détecteur optique (1) selon l'une quelconque des revendications précédentes dans lequel le réticule (30) et la rétine (20) sont configurés, en particulier la distance minimale Z et la dimension a, de sorte à générer sur la rétine (20) au moins un premier diagramme de diffusion S1 formé par la première partie diffusée (31) et un deuxième diagramme de diffusion S2 formé par la deuxième partie diffusée (32), lesdits au moins premier et deuxième diagrammes de diffusion S1, S2 formant chacun au moins un pic ($S_{1pic}$, $S_{2pic}$) lumineux correspondant à l'au moins une zone de passage optique (301, 302) et présentant une base ($BS_1$, $BS_2$), les bases ($BS_1$, $BS_2$) de chaque diagramme de diffusion S1, S2 étant décalées sur la rétine (20) d'une distance de séparation $L_{Bases} \geq$ 2*Lpix lorsque les première (31) et deuxième (32) parties passant à travers la zone de passage optique (301) définissent ensemble un angle $\theta_{ij}$ dont la valeur est au moins égale à une résolution angulaire $\delta\theta$ du détecteur (1), Lpix étant le pas entre deux photodétecteurs adjacents de la rétine (20).

5. Détecteur optique (1) selon la revendication précédente dans lequel le pic $S_{1p1}, S_{2pic}$ de chaque diagramme comprend au moins un sommet ($SS_1$, $SS_2$) la base ($BS_1$, $BS_2$) étant située à une hauteur du pic ($S_{1pic}, S_{2pic}$) égale à 10% de la hauteur ($HS_1$, $HS_2$) du sommet ($SS_1$, $SS_2$), et de préférence située à une hauteur du pic ($S_{1pic}, S_{2pic}$) égale à 5% de la hauteur ($HS_1$, $HS_2$) du sommet $SS_1$, $SS_2$.

6. Détecteur optique (1) selon l'une quelconque des revendications précédentes dans lequel l'au moins une zone de passage optique (301, 302) comprend au moins un motif de sténopé et au moins un motif de fente, lesdits motifs étant en partie superposés.

7. Détecteur optique (1) selon l'une quelconque des revendications précédentes dans lequel la zone de passage optique (301, 302) comprend une pluralité de motifs de sténopé.

8. Détecteur optique (1) selon l'une quelconque des revendications précédentes dans lequel la zone de passage optique (301, 302) comprend au moins un motif de fente courbe ($311_{-c}$) présentant une courbure dirigée vers un centre du réticule (30).

9. Détecteur optique (1) selon l'une quelconque des revendications précédentes dans lequel la dimension a est telle que $a \geq 10.Lpix.(Z/(Z+Zp))$ où Zp est la distance minimale séparant le volume utile (100) de détection d'au moins une parmi lesdites zones de passage et de blocage optique (301, 300) et Lpix est le pas entre deux photodétecteurs adjacents de la rétine (20).

10. Détecteur optique (1) selon l'une quelconque des revendications précédentes dans lequel les distances Z et Zp sont telles que $0,2.\,Z \leq Z_p \leq 2.\,Z$ où Zp est la distance minimale séparant le volume utile (100) de détection d'au moins une parmi lesdites zones de passage et de blocage optique (301, 300).

11. Détecteur optique (1) selon l'une quelconque des revendications précédentes dans lequel le volume utile (100) de détection est compris dans un angle $FOV = $ atan ($L/2z$) où L est une dimension latérale de la rétine (20) prise dans un plan parallèle à une face de la rétine (20) tournée au regard du réticule (30), ledit angle FOV présentant un sommet s'étendant depuis l'au moins une ouverture (301, 302) et un axe de symétrie parallèle à l'axe optique (O), ledit angle FOV définissant un champ de vue du détecteur optique (1).

12. Détecteur optique (1) selon l'une quelconque des revendications précédentes comprenant en outre au moins un canal (110) fluidique configuré pour guider les particules ($10_i$, $10_j$) vers le volume utile (100) de détection, l'au moins un canal (110) traversant le réticule (30) au niveau d'un orifice (310) formé dans le réticule (30).

13. Détecteur optique (1) selon la revendication précédente dans lequel l'au moins une zone de passage optique (301, 302) comprend une pluralité de zones de passage optique (301, 302, 303, 304) réparties autour de l'orifice (310).

14. Détecteur optique (1) selon la revendication précédente dans lequel la pluralité de zones de passage optique (301, 302, 303, 304) comprend au moins une première zone de passage optique (301) et au moins une deuxième zone de passage optique (302) situées de part et d'autre de l'orifice (310) du canal (110).

15. Détecteur optique (1) selon la revendication précédente dans lequel ladite au moins une première zone de passage optique (301) présente une dimension caractéristique (a1) au moins deux fois inférieure à une dimension caractéristique (a2) de l'au moins une deuxième zone de passage optique (302).

**Patentansprüche**

1. Optischer Detektor (1) für Partikel ($10_i$, $10_j$) ohne Linse, der dazu bestimmt ist, gleichzeitig mindestens ein erstes Partikel ($10_1$) und mindestens ein zweites Partikel ($10_2$) innerhalb eines nutzbaren Detektionsvolumens (100) zu detektieren, das dazu bestimmt ist, ein die Partikel ($10_i$, $10_j$) transportierendes Fluid aufzunehmen und von einfallenden Lichtstrahlen ($k_i$) durchdrungen zu werden, die von mindestens einer Primärquelle (11a, 11b) emittiert werden, wobei das erste und das zweite Partikel ($10_1$, $10_2$) jeweils eine erste und eine zweite Sekundärquelle (21, 22) bilden, die, wenn sie sich in dem nutzbaren Detektionsvolumen (100) befinden und einen Teil der einfallenden Lichtstrahlen ($k_i$) ausstrahlen, jeweils die ersten gestreuten Lichtstrahlen ($k_{d1}$) und die zweiten gestreuten Lichtstrahlen ($k_{d2}$) emittieren, wobei der Detektor (1) eine Netzhaut (20) umfasst, die aus einer Vielzahl von Fotodetektoren gebildet ist, die geeignet sind, gestreute Lichtstrahlen zu empfangen, wobei der Detektor (1) ferner mindestens ein Fadenkreuz (30) umfasst, das zwischen dem nutzbaren Detektionsvolumen (100) und der Netzhaut (20) angeordnet ist, wobei das Fadenkreuz (30) Folgendes umfasst:

- mindestens einen optischen Durchgangsbereich (301, 302), der einen Durchgang eines Teils (31) der ersten gestreuten Lichtstrahlen ($k_{d1}$) und eines Teils (32) der zweiten gestreuten Lichtstrahlen ($k_{d2}$) zu der Netzhaut (20) ermöglicht, wobei die Teile der ersten und zweiten gestreuten Lichtstrahlen jeweils als erster (31) und zweiter (32) gestreuter Teil bezeichnet werden,

- mindestens einen optischen Sperrbereich (300), der den Durchgang eines Teils (51) der ersten gestreuten Lichtstrahlen ($k_{d1}$) und eines Teils (52) der zweiten gestreuten Lichtstrahlen ($k_{d2}$) zu der Netzhaut (20) verhindert,

wobei mindestens einer des optischen Durchgangsbereichs und des optischen Sperrbereichs (301, 300):

- von der Netzhaut (20) durch einen Mindestabstand Z getrennt ist, der entlang einer zu der Netzhaut normalen optischen Achse (O) gemessen wird,
- ferner mindestens eine Abmessung a aufweist, die in einer zu der optischen Achse (O) quer velaufenden Richtung gemessen wird,

wobei das Fadenkreuz (30) und die Netzhaut (20) so konfiguriert sind, insbesondere der Mindestabstand Z und die Abmessung a, dass:

- der erste gestreute Teil (31) von einer ersten Gruppe von Fotodetektoren empfangen wird, deren Verteilung auf der Netzhaut eine erste Figur aus einem Fleck (T1) und einem Schatten (B1) abgrenzt,
- der zweite gestreute Teil (32) von einer zweiten Gruppe von Fotodetektoren empfangen wird, deren Verteilung auf der Netzhaut eine zweite Figur aus einem Fleck (T2) und einem Schatten (B2) abgrenzt, wobei sich die zweite Figur (T2, B2) mindestens teilweise von der ersten Figur (T1, B1) unterscheidet, wenn der erste (31) und der zweite (32) Teil, die durch den mindestens einen optischen Durchgangsbereich (301, 302) verlaufen, gemeinsam einen Winkel $\theta_{ij}$ definieren, dessen Wert mindestens gleich einer Winkelauflösung $\delta\theta$ des Detektors (1) ist,

wobei der optische Detektor (1) **dadurch gekennzeichnet ist, dass** er keine Linse zwischen dem Fadenkreuz (30) und der Netzhaut (20) umfasst.

2. Optischer Detektor (1) nach dem vorhergehenden Anspruch, wobei das Fadenkreuz (30) und die Netzhaut (20) so konfiguriert sind, insbesondere der Mindestabstand Z und die Abmessung a, dass die zweite Figur (T2, B2) gegenüber der ersten Figur (T1, B1) auf der Netzhaut (20) versetzt ist, wobei der kleinste Abstand $L_s$, der dieser Verschiebung zwischen diesen beiden Figuren (T1, T2, B1, B2) entspricht, größer oder gleich 2*Lpix ist, wenn der erste (31) und der zweite (32) gestreute Teil, die durch den mindestens einen optischen Durchgangsbereich (301, 302) verlaufen, zusammen einen Winkel $\theta_{ij}$ definieren, dessen Wert mindestens gleich einer Winkelauflösung $\delta\theta$ des Detektors ist, wobei Lpix der Abstand zwischen zwei benachbarten Fotodetektoren der Netzhaut ist.

3. Optischer Detektor (1) nach dem vorhergehenden Anspruch, wobei die Abmessung a so konfiguriert ist, dass

$$a = (Z.\tan(\delta\theta) - L_s)\frac{Z_p}{Z + Z_p}$$

wobei Zp der Mindestabstand zwischen dem nutzbaren Detektionsvolumen von mindestens einem des optischen Durchgangsbereichs und des optischen Sperrbereichs (301, 300) ist.

4. Optischer Detektor (1) nach einem der vorhergehenden Ansprüche, wobei das Fadenkreuz (30) und die Netzhaut (20) so konfiguriert sind, insbesondere der Mindestabstand Z und die Abmessung a, dass auf der Netzhaut (20) mindestens ein erstes Streudiagramm S1, das durch den ersten gestreuten Teil (31) gebildet wird, und ein zweites Streudiagramm S2, das durch den zweiten gestreuten Teil (32) gebildet wird, erzeugt wird, wobei mindestens das erste und das zweite Streudiagramm S1, S2 jeweils mindestens einen Licht-Peak ($S_{1pic}$, $S_{2pic}$) bilden, der dem mindestens einen optischen Durchgangsbereich (301, 302) entspricht und eine Basis ($BS_1$, $BS_2$) aufweist, wobei die Basen ($BS_1$, $BS_2$) jedes Streudiagramms S1, S2 auf der Netzhaut (20) um einen Trennabstand $L_{Bases} \geq 2$*Lpix versetzt sind, wenn der erste (31) und der zweite (32) Teil, die durch den optischen Durchgangsbereich (301) verlaufen, gemeinsam einen Winkel $\theta_{ij}$ definieren, dessen Wert mindestens gleich einer Winkelauflösung $\delta\theta$ des Detektors (1) ist, wobei Lpix der Abstand zwischen zwei benachbarten Fotodetektoren der Netzhaut (20) ist.

5. Optischer Detektor (1) nach dem vorhergehenden Anspruch, wobei der Peak $S_{1Pic}$, $S_{2pic}$ jedes Diagramms mindestens einen Scheitelpunkt ($SS_1$, $SS_2$) umfasst, wobei die Basis ($BS_1$, $BS_2$) auf einer Höhe des Peaks ($S_{1Pic}$, $S_{2Pic}$) liegt, die gleich 10 % der Höhe ($HS_1$, $HS_2$) des Scheitelpunkts ($SS_1$, $SS_2$) ist, und vorzugsweise auf einer Höhe des Peaks ($S_{1pic}$, $S_{2pic}$) liegt, die gleich 5 % der Höhe ($HS_1$, $HS_2$) des

Scheitelpunkts $SS_1$, $SS_2$ ist.

6. Optischer Detektor (1) nach einem der vorhergehenden Ansprüche, wobei der mindestens eine optische Durchgangsbereich (301, 302) mindestens ein Lochblendenmuster und mindestens ein Schlitzmuster umfasst, wobei die Muster teilweise übereinander liegen.

7. Optischer Detektor (1) nach einem der vorhergehenden Ansprüche, wobei der optische Durchgangsbereich (301, 302) eine Vielzahl von Lochblendenmustern umfasst.

8. Optischer Detektor (1) nach einem der vorhergehenden Ansprüche, wobei der optische Durchgangsbereich (301, 302) mindestens ein gebogenes Schlitzmuster ($311_{-c}$) umfasst, das eine Krümmung aufweist, die in Richtung eines Zentrums des Fadenkreuzes (30) gerichtet ist.

9. Optischer Detektor (1) nach einem der vorhergehenden Ansprüche, wobei die Abmessung a so ist, dass $a \geq 10.Lpix.(Z/(Z+Zp))$ beträgt, wobei Zp der Mindestabstand zwischen dem nutzbaren Detektionsvolumen (100) von mindestens einem des optischen Durchgangsbereichs und des optischen Sperrbereichs (301, 300) ist und Lpix der Abstand zwischen zwei benachbarten Fotodetektoren der Netzhaut (20) ist.

10. Optischer Detektor (1) nach einem der vorhergehenden Ansprüche, wobei die Abstände Z und Zp so sind, dass $0,2.Z \leq Zp \leq 2.Z$ betragen, wobei Zp der Mindestabstand zwischen dem nutzbaren Detektionsvolumen (100) von mindestens einem des optischen Durchgangsbereichs und des optischen Sperrbereichs (301, 300) ist.

11. Optischer Detektor (1) nach einem der vorhergehenden Ansprüche, wobei das nutzbare Detektionsvolumen (100) in einem FOV-Winkel = atan (*L/2z*) liegt, wobei L eine seitliche Abmessung der Netzhaut (20) ist, die in einer Ebene parallel zu einer Fläche der Netzhaut (20) gemessen wird, die zu dem Fadenkreuz (30) gedreht ist, wobei der FOV-Winkel einen Scheitelpunkt, der sich von der mindestens einen Öffnung (301, 302) aus erstreckt, und eine Symmetrieachse parallel zu der optischen Achse (O) aufweist, wobei der FOV-Winkel ein Sichtfeld des optischen Detektors (1) definiert.

12. Optischer Detektor (1) nach einem der vorhergehenden Ansprüche, der ferner mindestens einen fluidischen Kanal (110) umfasst, der so konfiguriert ist, dass er die Partikel ($10_i$, $10_j$) in das nutzbare Detektionsvolumen (100) leitet, wobei der mindestens eine Kanal (110) das Fadenkreuz (30) an einer in dem Fadenkreuz (30) ausgebildeten Öffnung (310) durchquert.

13. Optischer Detektor (1) nach dem vorhergehenden Anspruch, wobei der mindestens eine optische Durchlassbereich (301, 302) eine Vielzahl von optischen Durchlassbereichen (301, 302, 303, 304) umfasst, die um die Öffnung (310) herum verteilt sind.

14. Optischer Detektor (1) nach dem vorhergehenden Anspruch, wobei die Vielzahl von optischen Durchgangsbereichen (301, 302, 303, 304) mindestens einen ersten optischen Durchgangsbereich (301) und mindestens einen zweiten optischen Durchgangsbereich (302) umfasst, die auf beiden Seiten der Öffnung (310) des Kanals (110) liegen.

15. Optischer Detektor (1) nach dem vorhergehenden Anspruch, wobei der mindestens eine erste optische Durchgangsbereich (301) eine Merkmalsabmessung (a1) aufweist, die mindestens doppelt so klein ist wie eine Merkmalsabmessung (a2) des mindestens einen zweiten optischen Durchgangsbereichs (302).

**Claims**

1. Optical detector (1) for particles ($10_i$, $10_j$), referred to as lensless, designed to simultaneously detect at least one first particle ($10_1$) and at least one second particle ($10_2$) within a useful detection volume (100) intended to accommodate a fluid carrying particles ($10_i$, $10_j$) and to be traversed by incident light rays ($k_i$) emitted by at least one primary source (11a, 11b) said first and second particles ($10_1$, $10_2$) respectively forming first and second secondary sources (21, 22) respectively emitting, when located within the useful detection volume (100) and diffusing part of the incident light rays ($k_i$), first diffused light rays ($k_{d1}$) and second diffused light rays ($k_{d2}$), said detector (1) comprising a retina (20) made up of a plurality of photodetectors capable of receiving diffused light rays, said detector (1) furthermore comprising at least one reticle (30) interposed between the useful detection volume (100) and the retina (20), said reticle (30) comprising:

   - at least one optical passage area (301, 302) allowing a pathway to the retina (20) for a part (31) of the first diffused light rays ($k_{d1}$) and a part (32) of the second diffused light rays ($k_{d2}$), said portions of the first and second diffused light rays being referred to as the first (31) and second (32) diffused parts, respectively,
   - at least one optical blocking zone (300) preventing a passage to the retina (20) of a part (51) of the first diffused light rays ($k_{d1}$) and a part (52) of the second diffused light rays ($k_{d2}$),

at least one of said optical passage and blocking zones (301, 300):

- being separated from the retina (20) by a minimum distance Z measured along an optical axis (O) perpendicular to the retina,
- further having at least one dimension taken in a direction transverse to the optical axis (O),

the reticle (30) and the retina (20) being configured, in particular the minimum distance Z and the dimension a, such that:

- the first diffused part (31) is received by a first set of photodetectors the distribution of which delimits on the retina a first figure taken from a spot (T1) and a shadow (B1),
- the second diffused part (32) is received by a second set of photodetectors the distribution of which delimits on the retina a second figure taken from a spot (T2) and a shadow (B2), said second figure (T2, B2) being at least in part distinct from the first figure (T1, B1) when the first (31) and second (32) parts passing through the at least one optical passage area (301, 302) together define an angle $\theta_{ij}$ the value of which is at least equal to an angular resolution $\delta\theta$ of the detector (1),

said optical detector (1) being **characterised in that** it does not comprise a lens between the reticle (30) and the retina (20).

2. Optical detector (1) according to the preceding claim, wherein the reticle (30) and the retina (20) are configured, particularly the minimum distance Z and the dimension a, such that the second figure (T2, B2) is offset relative to the first figure (T1, B1) on the retina (20), the smallest distance $L_s$ corresponding to this offset between these two figures (T1, T2, B1, B2) being greater than or equal to 2*Lpix, when the first (31) and second (32) diffused parts passing through at least one optical passage area (301, 302) together define an angle $\theta_{ij}$ the value of which is at least equal to an angular resolution $\delta\theta$ of the detector, Lpix being the pitch between two adjacent photodetectors of the retina.

3. Optical detector (1) according to the preceding claim, wherein said dimension a is configured so that

$$a = (Z.tan(\delta\theta) - L_s)\frac{Z_p}{Z + Z_p}$$

where Zp is the minimum distance separating the useful detection volume from at least one of said optical passage and blocking areas (301, 300).

4. Optical detector (1) according to any one of the preceding claims, wherein the reticle (30) and the retina (20) are configured, in particular the minimum distance Z and the dimension a, so as to generate on the retina (20) at least a first diffusion diagram S1 formed by the first diffused part (31) and a second diffusion diagram S2 formed by the second diffused part (32), said at least first and second diffusion diagrams S1, S2 each forming at least one light peak ($S_{1peak}$, $S_{2peak}$) corresponding to the at least one optical passage area (301, 302) and having a base ($BS_1$, $BS_2$), the bases ($BS_1$, $BS_2$) of each diffusion diagram S1, S2 being offset on the retina (20) by a separation distance $L_{Bases} \geq 2*Lpix$ when the first (31) and second (32) parts, passing through the optical passage area (301), together define an angle $\theta_{ij}$ the value of which is at least equal to an angular resolution $\delta\theta$ of the detector (1), Lpix being the pitch between two adjacent photodetectors of the retina (20).

5. Optical detector (1) according to the preceding claim, wherein the peak $S_{1Pic}$, $S_{2pic}$ of each diagram comprises at least one vertex ($SS_1$, $SS_2$), the base ($BS_1$, $BS_2$) being located at a height of the peak ($S_{1Pic}$, $S_{2Pic}$) equal to 10% of the height ($HS_1$, $HS_2$) of the vertex ($SS_1$, $SS_2$), and preferably located at a height of the peak ($S_{1pic}$, $S_{2pic}$) equal to 5% of the height ($HS_1$, $HS_2$) of the vertex ($SS_1$, $SS_2$).

6. Optical detector (1) according to any one of the preceding claims, wherein the at least one optical passage area (301, 302) comprises at least one pinhole pattern and at least one slit pattern, said patterns being partially superimposed.

7. Optical detector (1) according to any one of the preceding claims, wherein the optical passage area (301, 302) comprises a plurality of pinhole patterns.

8. Optical detector (1) according to any one of the preceding claims, wherein the optical passage area (301, 302) comprises at least one curved slit pattern ($311_{-c}$) having a curvature directed towards the centre of the reticle (30).

9. Optical detector (1) according to any one of the preceding claims, wherein the dimension a is such that $a \geq 10.Lpix.(Z/(Z+Zp))$, where Zp is the minimum distance separating the useful detection volume (100) from at least one of said optical passage and blocking areas (301, 300), and Lpix is the pitch between two adjacent photodetectors of the retina (20).

**10.** Optical detector (1) according to any one of the preceding claims wherein the distances Z and Zp are such that $0.2 . Z \leq Zp \leq 2. Z$ where Zp is the minimum distance separating the useful detection volume (100) from at least one of said optical passage and blocking areas (301, 300).

**11.** Optical detector (1) according to any one of the preceding claims, wherein the useful detection volume (100) is contained within an angle $FOV = \text{atan} (L/2z)$, where L is a lateral dimension of the retina (20) taken in a plane parallel to a face of the retina (20) that is oriented towards the reticule (30), said angle FOV having a vertex extending from at least one opening (301, 302) and an axis of symmetry parallel to the optical axis (O), with said FOV angle defining a field of view of the optical detector (1).

**12.** Optical detector (1) according to any one of the preceding claims, furthermore comprising at least one fluidic channel (110) configured to guide the particles ($10_i$, $10_j$) to the useful detection volume (100), the at least one channel (110) passing through the reticle (30) at an orifice (310) formed in the reticle (30).

**13.** Optical detector (1) according to the preceding claim, wherein the at least one optical passage area (301, 302) comprises a plurality of optical passage areas (301, 302, 303, 304) distributed around the orifice (310).

**14.** Optical detector (1) according to the preceding claim, wherein the plurality of optical passage areas (301, 302, 303, 304) comprises at least one first optical passage area (301) and at least one second optical passage area (302) located on either side of the orifice (310) of the channel (110).

**15.** Optical detector (1) according to the preceding claim, wherein said at least one first optical passage area (301) has a characteristic dimension (a1) at least two times smaller than a characteristic dimension (a2) of the at least one second optical passage area (302).

FIG. 1

FIG. 2A

FIG. 2B

FIG. 3

FIG. 4

FIG. 5

EP 4 049 000 B1

311 312

FIG. 6A

311 312

FIG. 6B

311 312 311

FIG. 6C

311 312

FIG. 6D

FIG. 6E

311 $311_{-c}$

FIG. 6F

FIG. 6G

FIG. 6H

$311_{+c}$

FIG. 6I

$311_{+c}$

FIG. 6J

EP 4 049 000 B1

$10_1(\theta_1)$   $10_1(\theta_2)$   $10_1(\theta_3)$

$10_1$

$K_i$

30

$P_1(\theta_1)$   $P_2(\theta_2)$   $P_3(\theta_3)$

FIG. 7A

T

$P_3(\theta_3)$

$P_2(\theta_2)$

$P_1(\theta_1)$

FIG. 7B

FIG. 8A

FIG. 8B

FIG. 9

FIG. 10

FIG. 11

301

30

300

FIG. 12

S$_1$

20

B$_1$

FIG. 13A

S$_1$+S$_2$

20

B$_1$

321

B$_2$

322

FIG. 13B

$S_1+S_2+S_3$

20

$B_1$

321

323

$B_2$

$B_2$

324

322

FIG. 13C

301          300

30

FIG. 14

FIG. 15A

FIG. 15B

FIG. 16

FIG. 17

FIG. 18A

FIG. 18B

FIG. 18C

FIG. 18D

FIG. 18E

FIG. 18F

300
301
30
110
300b
302

FIG. 18G

FIG. 19A

FIG. 19B

FIG. 20A

EP 4 049 000 B1

FIG. 20B

FIG. 21A

FIG. 21B

EP 4 049 000 B1

## RÉFÉRENCES CITÉES DANS LA DESCRIPTION

**Documents brevets cités dans la description**

- FR 3062209
- US 5101113 A
- US 2014152986 A1

**Littérature non-brevet citée dans la description**

- **BOHREN** ; **HUFFMANN**. Absorption and scattering of light by small particles. Wiley and Sons, 1983
- **S. WANG** ; **X. XIAO** ; **T. DENG** ; **A. CHEN** ; **M. ZHU**. A Sauter mean diameter sensor for fire smoke detection. *Sensors & Actuators: B. Chemical*, 2019, vol. 281, 920-932